# EUROPEAN PATENT APPLICATION

(11) **EP 4 349 723 A1**
(43) Date of publication of application: **10.04.2024**
(21) Application number: 21944150.8
(22) Date of filing: 03.06.2021
(51) Int. Cl.: B65B 9/067

(54) **PACKAGING DEVICE**

(71) Applicant: Nippon Polystar Co., Ltd., Konan-shi, Shiga 520-3114 (JP)
(72) Inventor: TAKAI Fumihiko, Konan-shi, Shiga 520-3114 (JP); OTSUKA Fumihiko, Konan-shi, Shiga 520-3114 (JP)
(74) Representative: Marks & Clerk LLP
(86) International application number: PCT/JP2021/021163
(87) International publication number: WO 2022/254649

(57) **Abstract**

[Problem] To avoid a seal defect due to congestion in conveying a film sheet when an end section seal is formed.

[Solution] Provided is a packaging device in which: when a film sheet f that wraps a to-be-packaged object B passes between upper and lower seal blocks A81, A82, a gripping drive part closes a gap between both the seal blocks A81, A82 and grips the film sheet f, thereby forming an end section seal on the film sheet f; while forming the end section seal, a feeding drive part moves both the seal blocks A81, A82 in the front-rear direction; and a seal pressure, for simply forming the end section seal on the film sheet f by selecting an angle range for the forward/backward rotation of a servomotor that is a power source in the gripping drive part, can be adjusted.

## Description

### Technical Field

The present invention relates to a packaging machine.

### Background Art

Pillow packaging (butt-seam bag), which is widely used for packaging of food (product to be packaged), uses a bag making machine to bend a band-shaped film sheet sent out by a roller to sequentially package the product to be packaged, and a center seal is formed on a side end of the butted film sheets to make a cylindrical shape, then (tail/top) ends are sealed on each of individual product to be packaged, that is, an end-part seal is formed and cut, whereby individual packaged bodies are completed.

The conventional pillow-type packaging machine as described above is the one which sequentially packages a plurality of product to be packaged whose size or shape is uniform during an operation and cannot handle packaging of the irregular product to be packaged whose size or shape is not uniform during the operation.

Thus, in order to solve the aforementioned problem of the conventional pillow-type packaging machine, a pillow-type packaging machine shown in Patent Document 1 was proposed.

The pillow-type packaging machine shown in Patent Document 1 includes a packaging machine main-body A1 which includes a center seal portion 1 forming a center seal with both ends in a width direction of a band-shaped film sheet (film f) along a longitudinal direction in order to enclose a product to be packaged B and a top seal portion 2 forming a top seal (end-part seal) extending in the width direction of the film sheet before and after the film sheet disposed on a downstream side of a conveyance direction of the product to be packaged B for enclosing the product to be packaged B onto the film sheet, and a supply conveyer A2 disposed on an upstream side of the packaging machine main-body A1 for supplying the product to be packaged B to the packaging machine main-body A1 at appropriate timing, a product detection sensor 3 disposed on the upstream side of the center seal portion 1 which detects a length of the product to be packaged, and a control device which calculates an operation pattern and operation timing of a seal means of the top seal portion 2 and a film length required for packaging based on a length of the product to be packaged B calculated based on data detected by the product detection sensor 3 and controls the operation of the seal means based on the calculated operation pattern, operation timing, and required film length are provided, the film length required for the packaging is a length obtained by adding an excess material length before and after to the length of the product to be packaged B calculated based on the data detected by the product detection sensor 3, the excess material length is determined also depending on a value of a height of the product to be packaged detected by the product detection sensor 3, and when the length of the product to be packaged B is smaller than a value of an operation trajectory of the seal means which seals the top seal portion 2, the control device operates the seal means at a speed higher than a speed in the conveyance direction during sealing before and after the sealing, while when the length of the product to be packaged is larger than the value of the operation trajectory of the seal means which seals the top seal portion 2, the control device operates the seal means at a speed slower than the speed in the conveyance direction during the sealing before and after the sealing (Claim 1, Figs. 1, 2, and 5 in Patent Document 1).

In the pillow-type packaging machine shown in Patent Document 1, even if the products to be packaged B with different lengths are continuously supplied from the supply conveyer A2 to the packaging machine main-body A1 side, packaging with favorable appearance matching the length of the product to be packaged B can be rapidly performed without changing setting for each of the products to be packaged, which are irregular in size.
Therefore, labors of workers are drastically reduced, and the film is not wasted more than necessary.

In the aforementioned Patent Document 1, regarding an operation of the aforementioned seal means of the pillow-type packaging machine which forms the top seal by sandwiching and heating the conveyed film sheets, that is, a pair of elevating seal blocks 2a and 2b, a "rotary type" (Figs. 1, 3, 5 and paragraphs 0026 to 0028 in the specification of Patent Document 1) and a "box-motion type" (Figs. 6 to 8 and paragraphs 0029 to 0037 in Patent Document 1) are shown. The operation of the "rotary type" described above will be briefly described (see Fig. 12 attached to the present application together with the above-described part of Patent Document 1).

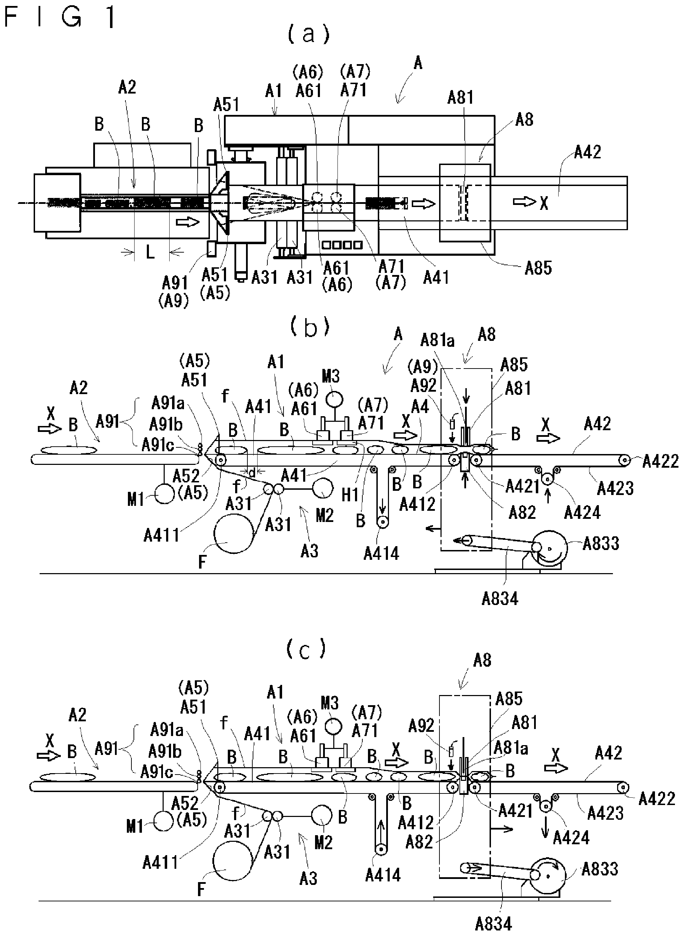

In the downstream side of the center seal portion 1, the top seal portion 2 (Fig. 1 in Patent Document 1) which seals before and after the film f in a width direction so as to be orthogonal to a conveyance direction X is provided, the film f is formed in cylindrical shape in the center seal portion 1 and encloses the product to be packaged B inside the cylindrical shape.

The aforementioned top seal portion 2 is configured such that a pair of upper and lower seal blocks (seal means) 2a, 2b disposed on (near outer peripheral surfaces of) end surfaces of cylindrical bodies 2A, 2B so as to contact with and separate from are brought into contact on a substantially center of the product to be packaged B in the height direction, and the film f is sealed by a heat seal portion (electrothermal heater), that is, heating means, provided at a tip of the seal blocks 2a, 2b (Figs. 1, 3, 5, and 6 in Patent Document 1).

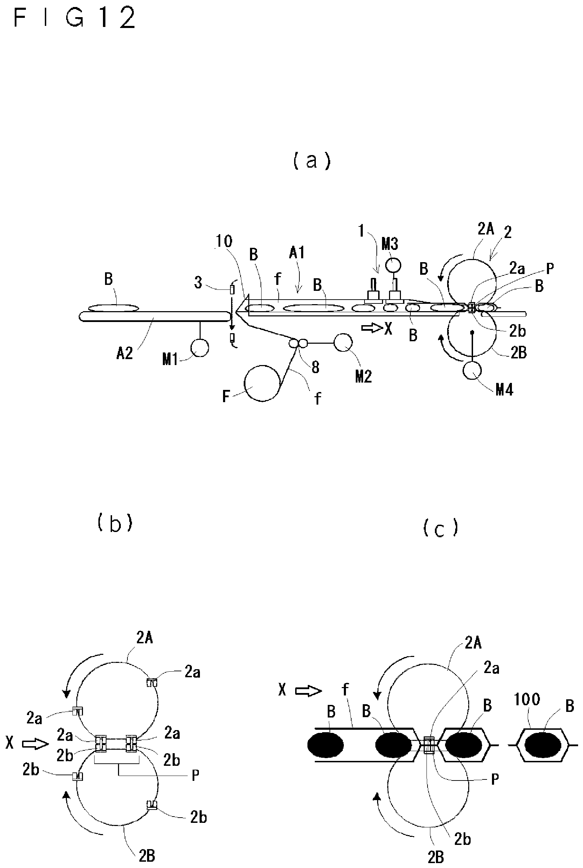

In Fig. 12a attached to the present application, reference character M1 denotes a drive motor of the supply conveyer A2, reference character M2 denotes a film supply motor which drives a pair of film-supply rollers 8 (film feed rollers) that pull out the film sheet from a film roll body F (film roll) of a film-sheet supply device, reference character M3 denotes a center-seal drive motor which drives the center seal portion 1, and reference character M4 denotes a top-seal drive motor which rotates the cylindrical bodies 2A, 2B of the top seal portion 2.

As shown in Fig. 12a attached to the present application, in the "rotary type" in Patent Document 1, the seal blocks 2a, 2b are circulated and driven by rotating the cylindrical bodies 2A, 2B due to the top-seal drive motor M4, the film sheet is sandwiched between the both seal blocks 2a, 2b and pulled so as to advance the film sheet, and the film sheet is sealed and thermally cut while the both seal blocks 2a, 2b sandwich the film sheet. Reference numeral 100 in Fig. 12c attached to the present application denotes a packaged body formed by the sealing and thermal cutting. That is, the packaged body 100 is a finished product in which the product to be packaged B is packaged with the film sheet.

Reference character P shown in Fig. 12b attached to the present application denotes a position (planned formation position of the top seal and will be referred to simply as a position P as necessary) where the film sheet of the top seal portion 2 is cut and sealed (welding/thermal cutting). As shown in Fig. 12b, the position P has a width to front and rear. That is because the upper and lower seal blocks 2a, 2b move in the conveyance direction in a state where the film sheet is sandwiched, and the position P can be considered as a section of movement while the film sheet is sandwiched.

In the "rotary type" in Patent Document 1, since the movement trajectories of the seal blocks 2a, 2b provided on the rotating cylindrical bodies 2A, 2B by the top-seal drive motor M4 are circular (curve) on a side view of the packaging machine, unless a large distance is ensured between the both products to be packaged B nearest to the position P before and after the planned formation position P of the top seal with regard to the product to be packaged B with a height (large vertical width), the nearest product to be packaged B is caught in the seal blocks 2a, 2b before the position P (on the upstream side) and stuck between the seal blocks 2a and 2b (Fig. 12c attached to the present application). In order to avoid the stuck state, the nearest product to be packaged B is necessary to keep away from the position P in a process of sealing by the seal blocks 2a, 2b, accordingly, it is necessary to ensure the large length of the film sheet between both the nearest products to be packaged B before and after the position P. By ensuring the length of the film sheet, the packaged body 100 which is long in front and rear is formed, as compared with the packaged body which packages the low (small vertical width) product to be packaged B.

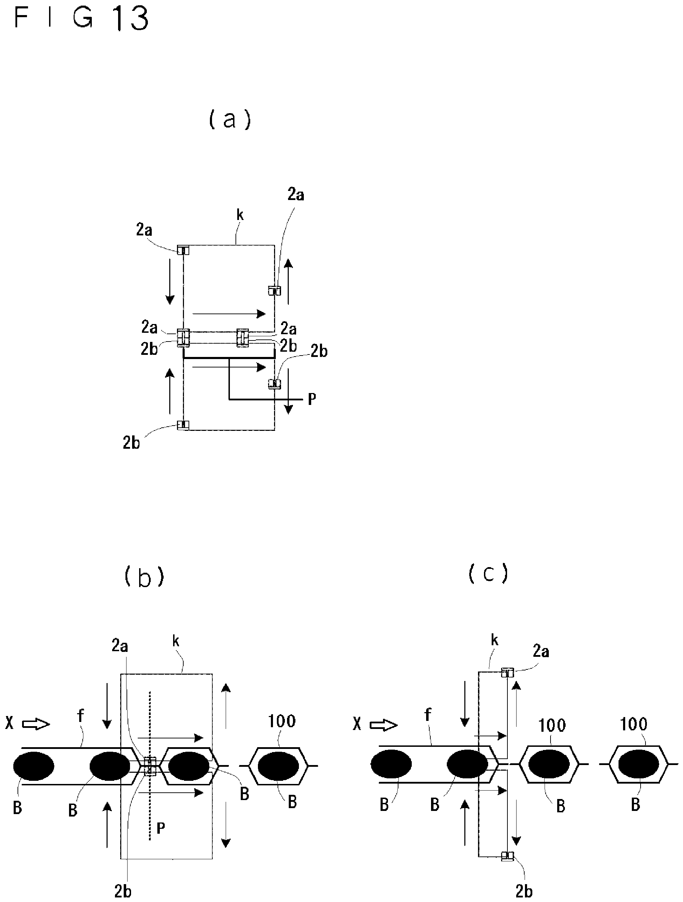

In the "box-motion type" in Patent Document 1, as shown in Figs. 13a and 13b attached to the present application, a movement trajectory k (side view of the packaging machine) of each of the seal blocks 2a, 2b (particularly the upper seal block 2a) has a square shape, and by setting the movement trajectory k so as to make long a vertical movement section, even when the height of the product to be packaged B is high, the length of the film sheet between the both products to be packaged B before and after the planned formation position P of the top seal does not have to be changed largely as compared with the case where the product to be packaged B with a low height is to be packaged.

The packaging machine of Patent Document 1 is excellent as described above but has the following points to be noted.

In detail, until the product to be packaged B is supplied from the supply conveyer A2, that is, until the product to be packaged B on the supply conveyer A2 is detected by the product detection sensor 3, the packaging machine main-body A1 may wait for conveyance of the product to be packaged B in a state where the film sheet is sandwiched by the seal blocks 2a, 2b at the planned formation position P of the top seal in some cases (Fig. 12a attached to the present application). In the standby state as above, the conveyance of the product to be packaged B on the packaging machine A1 stagnates until the product detection sensor 3 detects arrival of the subsequent product to be packaged B at the packaging machine main-body A1 (passage through the product detection sensor 3), and the position where the film sheet is sandwiched by the seal blocks 2a, 2b continuously receives heat generation of the seal blocks 2a, 2b and is melted, which could cause defective sealing.

The concern of occurrence of the defective sealing described above caused by stagnation (standby) at the seal position is applied not only to the aforementioned "rotary type" but also to the "box-motion type" in Patent Document 1. Fig. 13b attached to the present application shows the standby state by the box-motion type. The inventor of the present invention thought that, when the standby state in which the seal blocks 2a, 2b are positioned at the planned formation position P of the top seal as shown in Fig. 13b attached to the present application continues, occurrence of the defective sealing could be prevented if the seal blocks 2a, 2b can be opened as shown in Fig. 13c, but in also the box-motion type in Patent Document 1, since the elevation of the seal blocks 2a, 2b (vertical movement) and movement in a conveyance direction X (forward movement/backward movement) are performed by a mechanism which is integrally driven by obtaining power from the same power source, it was impossible to elevate (open) the seal blocks 2a, 2b regardless of the state of movement in the conveyance direction X.

If a plurality of the products to be packaged B having the same size and shape are sequentially conveyed at certain distances and packaged, even in the conventional rotary-type packaging machine prior to Patent Document 1, it is considered that it may handle by employing the one shown in Fig. 12a in which the timing for supplying the product to be packaged B to the packaging machine main-body A1 is set on a side of the supply conveyer A2 which supplies the product to be packaged B so that the aforementioned standby state is not brought about for the product to be packaged B on the packaging machine main-body A1. Moreover, upon using the conventional packaging machine, even when the dimension of the product to be packaged B is changed, the products to be packaged B after the change have the same size and shape, and in this case, even when the conveying speed of the upstream-side conveyer is set to the same as that before the change of the product to be packaged B by using two conveyers (not shown) aligned on the upstream side and the downstream side (on the packaging machine main-body A1 side) as the supply conveyer A2, the product to be packaged B on the packaging machine main-body A1 can be shifted the timing so as not to be the standby state at the position shown in Fig 12a attached to the present application by adopting a conveying speed on the conveyer on the downstream side different from that of the conveyer on the upstream side.

Moreover, it is considered that in a case that the plurality of products to be packaged B having the same shape and the same dimension are sequentially conveyed at the certain distances and packaged, in addition to the idea described above on the supply conveyer A2 side, the packaging machine main body A1 having a length dimension (machine length) which does not bring the product to be packaged B into the standby state at the position shown in Fig. 12A, or when the size of the products to be packaged B is the same where the size of the packaging machine main-body A1 is changed, the packaging machine main-body A1 is configured so that a length of a section between a bag former (former 10) which curves the film sheet so as to wrap the product to be packaged B and a center seal portion 1 can be changed in the conveyance direction. As a configuration of the packaging machine main-body A1 which can change the length of the above-mentioned section, the inventor of the present application thought that a former table (table) is formed in advance by stacking stainless plates on a conveying surface of the section, and the former table is extended or reduced in the conveyance direction by changing a length of a portion where the stainless plates overlap each other (not shown).

However, in the packaging machine of Patent Document 1 on a premise that a size, that is, dimensions such as a length and a height of the products to be packaged B supplied from the supply conveyer A2 are not uniform during an operation, in order to reliably avoid the standby state, neither of the ideas on the premise that the plurality of products to be packaged B with the same size are sequentially packaged is valid.

That is, as the packaging machine shown in Patent Document 1 that the operations of the seal blocks 2a, 2b are controlled by adjusting to the required length of the film sheet each time (at each packaging of the individual product to be packaged B) in a state where the products to be packaged having different sizes are mixed, it could not deal with each of the ideas described above.

Further, when the two conveyers aligned on the upstream side and the downstream side (on the packaging machine main-body A1 side) are employed as the aforementioned supply conveyer A2, in other words, when the supply conveyer A2 is simply divided (shared) by the two conveyers, if the shapes and dimensions are not uniform among the products to be packaged B, contact areas to the conveying surfaces usually become different among the products to be packaged B, an attitude (direction) of the product to be packaged B is not stable on the downstream-side conveyer with a conveying speed different from that of the upstream-side conveyer, and when it transfers from the upstream-side conveyer to the downstream-side conveyer, the attitudes (directions) may be disturbed among the products to be packaged B in some cases.

Furthermore, when the supply conveyer A2 is simply divided into two conveyers, the configuration becomes complicated as a whole, and time and effort required for cleaning or maintenance is necessary as compared with the case where the supply conveyer A2 is a single conveyer and moreover, costs also increase.

Further, even in the above case where the conveyer is disposed on each of the upstream side and the downstream side as the supply conveyers to change the conveying speeds, not only speed control of the conveyance but also position control of the products to be packaged B are necessary, and since complicated control of the conveyance is actually indispensable, a drive source and a controller capable of such control must be used, which spurs increase in the cost.

Even in the case where the machine length of the aforementioned packaging machine main-body A1, that is, a physical length thereof is selected or adjusted, when the plurality of products to be packaged B having the same size are sequentially conveyed and packaged at the certain distances during driving of the packaging machine, the aforementioned problems of the standby state may be avoided, though when the size of the products to be packaged B being conveyed during the operation of the packaging machine has different size, it is difficult to avoid the aforementioned problems of the standby state.

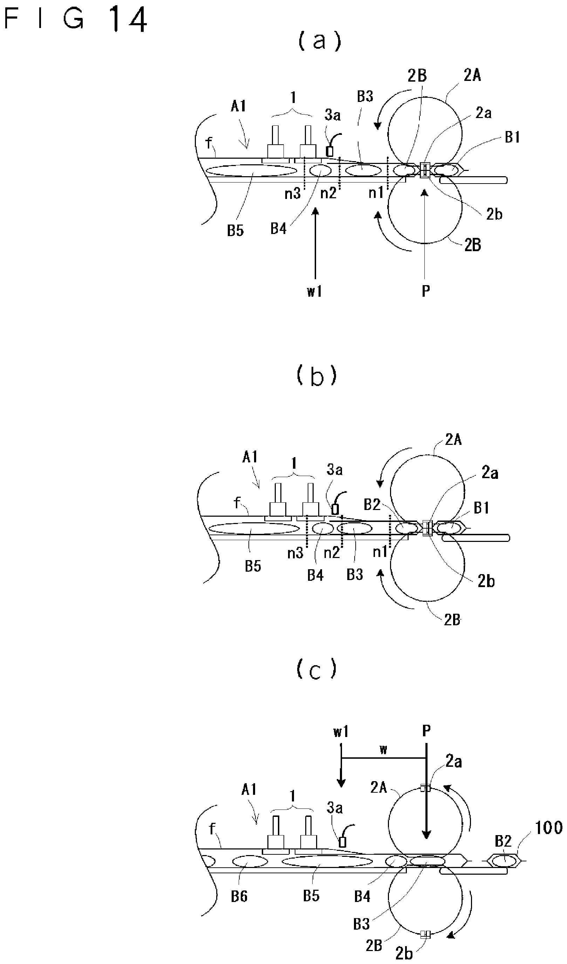

Further, in the packaging machine shown in Patent Document 1, when the plurality of products to be packaged B (B1 to B6) having different lengths are sequentially packaged with the film sheet, in either of the "rotary type" and the "box-motion type", in order to prevent jamming of the top seal (end-part seal) caused by a positional deviation of the product to be packaged B in a series of band-shaped film sheets before thermal cutting, a positional deviation detection sensor 3a which detects the positional deviation of the product to be packaged B is disposed before the planned formation position P of the top seal (Figs. 14a and 14c attached to the present application).

As shown in Fig. 14a above, the distances between sealing positions n1, n2, n3 need to be changed in accordance with the sequentially supplied products to be packaged B1 to B6, which are irregular in size, and in order to sequentially detect the sealing positions n1, n2, n3 without missing by using the positional deviation detection sensor 3a, the positional deviation detection sensor 3a needs to be disposed (at a disposed position w1) on the upstream side in the conveyance direction of the position P described above for a distance w corresponding to the length in accordance with the length of the product to be packaged B5 with the largest size (length) to be packaged (Fig. 14C).

The positional deviation of the product to be packaged in the film sheet is usually caused by inertia in the conveyance direction. The positional deviation of the product to be packaged B3 caused after passing through the positional deviation detection sensor 3a cannot be detected. Therefore, when the distance w from the position P is made larger, there is a concern that undetected positional deviations is frequently occurred. Further, due to the undetected positional deviations, there is a concern of increase of a situation that jamming of the product to be packaged B3 by the seal at the position n2 for sealing at the position P is occurred (FIG. 14B).

The jamming to the small products to be packaged B2 to B4 can be suppressed when the distance w sets to small, that is, the positional deviation detection sensor 3a disposes closer to the position P in accordance with the relatively small products to be packaged B2 to B4, but the large product to be packaged B5 cannot deal with.

Moreover, when the positional deviation occurs, as shown in Fig. 14b, each of the seal blocks 2a, 2b becomes in a state to be retreated to a position to which the film sheet is opened, and the top seal portion 2 (cylindrical bodies 2A, 2B in the shown "rotary type") is stopped. When a space between the seal blocks 2a, 2b is not kept open, the product to be packaged B3 cannot pass through the position P. Thus, the packaging machine cannot continue packaging after occurrence of the positional deviation.

On the other hand, Patent Document 2 proposes means for avoiding occurrence of defective sealing caused by the stagnation when the end-part seal (top seal) is formed on the film sheet. That is, in Patent Document 2, in the upper and lower heater blocks (seal blocks) forming the end-part seal (end seal) on the film sheet, a first servomotor which vertically moves the both heater blocks and a second servomotor which moves the both seal blocks forward/backward are provided, and when the movement in the conveyance direction stagnates in a state where the both seal blocks sandwich the film sheet, the both seal blocks are automatically opened. That is, the one shown in Patent Document 2 prevents the occurrence of defective sealing caused by heating by not allowing the state where the film sheet is sandwiched by the both seal blocks to continue so as not to heat the film sheet more than necessary.

However, neither of the packaging machines in Patent Document 1 and Patent Document 2 teach specific means for adjusting a seal pressure required for forming the end-part seal on the film sheet.

The seal pressure is one of important elements which determine a temperature for welding the film sheet, time for heating the film sheet, and sealing strength.

In Patent Document 2, the forced opening of a space between the seal blocks is enabled at the stagnation by providing the second servomotor which opens and closes the space between the seal blocks besides the second servomotor which moves the seal block front and rear, but the specific means for seal-pressure adjustment required for forming the end-part seal on the film sheet at normal operation is not taught.

Particularly, unlike the packaging machine in Patent Document 2, the packaging machine in Patent Document 1 assumes packaging of the sequentially supplied products to be packaged with different dimensions, and provision of simple means for changing the seal pressure required to give appropriate sealing strength was considered to be difficult.

Note that signs (numbers/symbols) described in Figs. 1 to 11 attached to the present application have nothing to do with the signs used in Patent Document 1 and Figs. 12 to 14 attached to the present application, and both signs are not consistent.

### Prior Art Document

### Patent Document

Patent Document 1: Japanese Patent No. 5325179
Patent Document 2: Japanese Patent No. 5955542

### Disclosure of Invention

### Problems to be Solved by the Invention

The present invention is to provide specific means for adjusting a seal pressure required for forming an end-part seal on a film sheet, and particularly in a packaging machine for box-motion of a seal block (constituent portion), a change of the seal pressure is enabled.

### Solution to Problem

The present invention is a packaging machine including a supply conveyer which supplies a product to be packaged, a sheet-supply portion which supplies a band-shaped film sheet for packaging, a bag former, and an end-part seal portion, in which, a longitudinal direction of the band-shaped film sheet is set to a front-rear direction; a plurality of the products to be packaged supplied from the supply conveyer are placed on the band-shaped film sheet supplied from the sheet-supply portion whereby the film sheet is conveyed along the front-rear direction; the bag former sequentially curves the film sheet in a width direction orthogonal to the longitudinal direction; after or before the curving, the supply conveyer sequentially places each of the products to be packaged onto the film sheet while taking a distance between the preceding product to be packaged and the subsequent product to be packaged; and the product to be packaged is wrapped with the curved film sheet, the end-part seal portion sequentially forms an end-part seal which seals at least either one of a front and a rear of each of the products to be packaged to the film sheet which wraps the product to be packaged; the end-part seal portion includes at least two constituting portions, which is a first constituting portion arranged near the film sheet after being curved and a second constituting portion arranged on an opposite side of the first constituting portion with the curved film sheet interposed therebetween; and the end-part seal portion includes a pinch drive portion and a feed drive portion; the pinch drive portion includes a motor capable of rotating a rotary shaft forward or backward within an arbitrary angle range; the pinch drive portion can convert the forward rotation of the rotary shaft of the motor into a linear motion and transmit it to at least any one of the constituting portions, whereby the one constituting portion can approach to the other constituting portion and can separate from the other constituting portion by reverse rotation of the rotary shaft of the motor; at least either one of both constituting portions is biased to the approaching direction by a elastically deformable snapping member; when the film sheet which wraps the product to be packaged passes through between the two constituting portions, the pinch drive portion closes a space between the both constituting portions by approaching at least one of the two constituting portions to the other constituting portion to sandwich the film sheet, whereby the end-part seal is formed on the both constituting portions, while the both constituting portions sandwich the film sheet, the feed drive portion moves at least the constituting portion which performs the approaching operation of the both constituting portions in the front-rear direction; when at least one of both constituting portions approaches to the other, the one and the other of both constituting portions pushes each other by an elastic force of the snapping member to give a pressure for forming the end-part seal to the sandwiched film sheet; and when at least one of the constituting portions approaches to the other upon the position which the constituting portions is the most separated from each other is as 0 degrees, before the rotary shaft rotates by half, that is, rotates forward by 180 degrees, the one and the other of the both constituting portions are brought into a state of pushing each other by the elastic force of the snapping member; and by selecting an angle range of the rotary shaft from the angle ranges at 180 degrees or less and by changing the range of the linear motion, the pressure can be adjusted.

Moreover, the present invention can provide a packaging machine which include a control portion; the control portion includes a storage portion which accommodates data for setting range of the rotation angle and a drive control portion which controls the motor; and the motor is a servomotor or a stepping motor; and the drive control portion controls the range of the rotation angle of the motor based on the data accommodated in the storage portion.

Furthermore, the present invention is a packaging machine including a supply conveyer which supplies a product to be packaged, a sheet-supply portion which supplies a band-shaped film sheet for packaging, a bag former, and an end-part seal portion, in which, a longitudinal direction of the band-shaped film sheet is set to a front-rear direction, a plurality of the products to be packaged supplied from the supply conveyer are placed on the band-shaped film sheet supplied from the sheet-supply portion whereby the film sheet is conveyed along the front-rear direction; and the film sheet is conveyed along the front-rear direction; the bag former sequentially curves the film sheet in a width direction orthogonal to the longitudinal direction; after or before the curving, the supply conveyer sequentially places each of the products to be packaged onto the film sheet while taking a distance between the preceding product to be packaged and the subsequent product to be packaged; and the product to be packaged is wrapped with the curved film sheet; the end-part seal portion sequentially forms an end-part seal which seals at least either one of a front and a rear of each of the products to be packaged to the film sheet which wraps the product to be packaged; the end-part seal portion includes at least two constituting portions, which is a first constituting portion arranged near the film sheet after being curved and a second constituting portion arranged on an opposite side of the first constituting portion with the curved film sheet interposed therebetween; and the end-part seal portion includes a pinch drive portion and a feed drive portion; when the film sheet which wraps the product to be packaged passes through between the two constituting portions, the pinch drive portion closes a space between the both constituting portions to sandwich the film sheet by bringing at least one of the two constituting portions to approach to the other constituting portion, whereby the end-part seal is formed on the both constituting portions, while the both constituting portions sandwich the film sheet; the feed drive portion moves at least the constituting portion which performs the approaching operation of the both constituting portions in the front-rear direction; the pinch drive portion includes a first mounting member on which the first constituting portion is mounted so as to face the second constituting portion and a second mounting member on which the second constituting portion is mounted so as to face the first constituting portion; the pinch drive portion causes the both constituting portions to approach to each other by bringing at least one mounting member of the both mounting members closer to the other mounting member and to separate the both constituting portions away from each other by separating the one mounting member from the other mounting member; either one of the both constituting portions is mounted on one of the mounting members via the elastically deformable snapping member; at least either one of the both constituting portions is biased to the approaching direction by the snapping member; when at least one of both constituting portions approaches to the other, the one and the other of both constituting portions pushes each other by an elastic force of the snapping member to give a pressure for forming the end-part seal to the sandwiched film sheet; and when the one mounting member of the both mounting members approaches to the other mounting member from a position where the both mounting members are the most separated from each other, before the both mounting members come the closest to each other, the one and the other of the both constituting portions are brought into a state of pushing each other by the elastic force of the snapping member; and the pressure can be adjusted by changing the distance between the both mounting members when the both mounting members come the closest to each other.

Furthermore, the present invention can provide a packaging machine such that the drive control portion has substantially the whole section for movement from a rearmost position to a frontmost position in the front-rear direction in a movement trajectory of each of the both constituting portions as a linear movement section in which the both constituting portions move forward with the film sheet therebetween.

Furthermore, the present invention can provide a packaging machine such that the drive control portion causes the pinch drive portion to perform the approaching operation between the both constituting portions while being located at the rearmost position in the front-rear movement of the constituting portion by the feed drive portion or while moving from the rearmost position to slightly front; and the drive control portion causes the pinch drive portion to perform the separating operation of the both constituting portions while being located at the frontmost position in the front-rear movement of the constituting portion by the feed drive portion or while moving from the frontmost position to slightly front, so that when viewed from a direction orthogonal to each of the direction of approaching/separating of the both constituting portions and the front-rear moving direction of the both constituting portions; each of the constituting portions presents a substantially rectangular movement trajectory.

Moreover, the present invention can provide a packaging machine such that a detection portion is provided; the feed drive portion includes a main motor which moves the both constituting portions along the conveyance direction of the film sheet with the motor of the pinch drive portion as a sub-motor; the detection portion includes one or a plurality of sensors, and the detection portion can detect a position of the product to be packaged in the at least front-rear direction; and the control portion can automatically control an operation of the end-part seal portion by the pinch drive portion at least by a position of the product to be packaged which is detected by the detection portion.

Furthermore, the present invention can provide a packaging machine such that the control portion includes a timer which can detect closing time while the both constituting portions are closed by driving of the pinch drive portion or can detect stagnation time when movement of the constituting portion by the feed drive portion stagnates, and when the timer detects that the closing time or the stagnation time reaches a preset time, the control portion forcedly opens a space between the both constituting portions by driving the pinch drive portion.

Furthermore, the present invention can provide a packaging machine such that a center-seal portion is provided on a downstream side of the bag former with respect to a conveyance direction of the film sheet; and the width direction is set as a horizontal direction; the center-seal portion forms a center seal extending in a longitudinal direction of the film sheet on the film sheet by overlapping and sealing both left and right end sides of the film sheet directed upward due to the curving above the product to be packaged; at least a part of the sensors constituting the detection portion is a dimension detection sensor provided on the upstream of the center-seal portion and capable of detecting a length and a height of the product to be packaged; and on the basis of the length in the front-rear direction of the individual product to be packaged calculated based on the data detected by the dimension detection sensor, the control portion calculates at least an operation pattern and operation timing of the constituting portion which performs the approaching operation and the length of the film sheet required for packaging; and based on the calculated operation pattern, operation timing, and the required length of the film sheet, the control of the drive of the pinch drive portion and the feed drive portion of the end-part seal portion is performed.

Furthermore, the present invention can provide a packaging machine capable of pillow packaging such that the first constituting portion is arranged on above the film sheet conveyed with the center seal formed; the second constituting portion is arranged on below the film sheet conveyed with the center seal formed; when the film sheet passes through between the both constituting portions, the pinch drive portion lowers the first constituting portion and raises the second constituting portion to sandwich the film sheet between the both constituting portions; at least one constituting portion of the both constituting portions includes a heat generating portion which performs heat-seal; one of the both constituting portions includes a cutting blade that appears and disappears from the constituting portion, and the other one of the both constituting portions includes a blade receiving portion which receives the cutting blade; by sandwiching the film sheet between the both constituting portions, the end-part seal is formed on the film sheet by the heat generating portion; and the film sheet is cut into front and rear by the cutting blade and the blade receiving portion.

Moreover, the present invention can provide a packaging machine such that a conveying conveyer which is arranged on the downstream side of the supply conveyer and performs the conveyance of the film sheet on which the product to be packaged is placed and an operating frame movable front and rear along the conveyance direction of the film sheet by the feed drive portion are provided; the conveying conveyer includes a main conveying portion and a sub-conveying portion arranged on the downstream side of the main conveying portion in the conveyance direction; the operating frame includes a pair of left and right vertical guides arranged on left and right of the conveying conveyer and extending vertically, and a pair of upper and lower seal blocks which is extended over the both vertical guides and is guided by the both vertical guides so as to be movable up and down by the pinch drive portion; of the seal blocks, the upper seal block is the first constituting portion and the lower seal block is the second constituting portion; the both seal blocks are operated vertically between the main conveying portion and the sub-conveying portion to open and close; in a state where at least a space between the both seal blocks is open, the upper seal block is positioned above a conveying surface of the conveying conveyer, while the lower seal block is positioned below the conveying surface; one of the surfaces of the pair of seal blocks facing each other is provided with the cutting blade extending to left and right and the heat generating portion extending to left and right is provided on each of the front and rear of the cutting blade as a border; the other one of the surfaces of the both seal blocks facing each other is provided with the blade receiving portion extending to left and right and the heat generating portion extending to left and right is provided on each of the front and rear of the blade receiving portion as a border; the film sheet is sandwiched between the both seal blocks; the end-part seal is formed on the film sheet by each of the heat generating portions; and the film sheet is cut into front and rear by the cutting blade and the blade receiving portion on the end-part seal.

Furthermore, the present invention can provide a packaging machine such that the feed drive portion includes a feed guide which is fixed directly or indirectly to the conveying conveyer and extending in the front-rear direction, the main motor which is fixed directly or indirectly to the conveying conveyer, a rotation plate rotated by the main motor, and a link member for feeding operation; a center line of rotation of the rotation plate extends in the horizontal direction; one end part of the link member for feeding operation is pivotally supported by the operating frame; the other end part of the link member for feeding operation is supported by the rotation plate at a position away from the center of rotation of the rotation plate, whereby the link member for feeding operation links the operating frame with the rotation plate; the feed drive portion can reciprocate the operating frame along the feed guide by rotation of the rotation plate by the main motor with a direction opposite to the conveyance direction as an outward path and the same direction as the conveyance direction as a return path; the pinch drive portion the pinch drive portion includes the sub-motor provided on the operating frame; a rotary plate which rotates forward and reversely with the sub-motor; a link member for cutting-back with one end supported by the rotary plate at a position away from the center of rotation of the rotary plate, a main shaft extending in the horizontal direction and supported by the operating frame; an arm for cutting-back which is provided on the main shaft and extending in a direction intersecting the main shaft and has a distal end part supported on the other end of the link member for cutting-back; a first arm provided on the main shaft at a position different from that of the arm for cutting-back in the horizontal direction and extending in the direction intersecting the main shaft; and a second arm provided on the main shaft and extending in the direction intersecting the main shaft and in a different direction from that of the first arm; a distal end of the first arm is connected to the first constituting portion directly or through another member; a distal end of the second arm is connected to the second constituting portion directly or through another member; the center line of the rotation of the rotary plate extends in the horizontal direction; at least a part of sensors constituting the detection portion is a position detection sensor which detect the approach of the product to be packaged on the main conveying portion to the sub-conveying portion; the position detection sensor is provided on the operating frame; under control of the control portion which detects the approach of the product to be packaged with the position detection sensor, the feed drive portion rotates the rotation plate by the main motor and causes the operating frame to start moving on the outward path by displacing the link member for feeding operation; under the control of the control portion which detects the approach by the position detection sensor, the sub-motor rotates the rotary plate by a predetermined angle, whereby the link member for cutting-back is displaced to rotate the main shaft; each of the first arm and the second arm is rotated integrally with the main shaft by the rotation of the main shaft to lower the first constituting portion and raise the second constituting portion; the film sheet is sandwiched by the first constituting portion and the second constituting portion between the product to be packaged approaching to the sub-conveying portion on the main conveying portion and a product to be packaged preceding the product to be packaged and having been already transferred to the sub-conveying portion; while the at least first constituting portion and the second constituting portion sandwich the film sheet, the control portion further rotates the rotation plate by the main motor and causes the operating frame to move on the return path by displacing the link member for feeding operation toward an original state; the first constituting portion and the second constituting portion perform a formation of the end-part seal on the sandwiched film sheet and cutting of the film sheet during the movement on the return path; the control portion returns the displaced link member for cutting-back to the state before the displacement by reversely rotating the rotary plate by the sub-motor; and the main shaft reversely rotates with the returning operation of the link member for cutting-back to return the a direction of each of the first arm and the second arm to the original state, thereby raising the first constituting portion to return to the position before lowering while lowering the second constituting portion to return to the position before raising.

Furthermore, the present invention can provide a packaging machine such that the main conveying portion includes a first tail pulley arranged on an upstream end side in the conveyance direction, a first head pulley arranged on a downstream end side, an annular first belt installed between the both pulleys, and a conveyer power source; in which the conveyer power source is an electric motor, the first head pulley rotates by direct or indirect transmission of a rotary force from the conveyer power source, the first head pulley can circulate and drive the annular first belt by the rotation, an upper surface of the first belt constitutes a part of the conveying surface in an upper section of the circulating first belt; the first head pulley is pivotally supported by the operating frame and moves front and rear in the conveyance direction together with the operating frame; the main conveying portion includes a first length-adjusting pulley which is arranged on an inner side of the annular first belt and is installed on the first belt in a lower section of the circulating first belt; the first length-adjusting pulley can be displaced in the vertical direction, by displacing the first length-adjusting pulley downward, the first head belt is pulled out downward to move the first head pulley rearward, namely upstream side, in the conveyance direction, and the first belt is moved back upward by displacing the first length-adjusting pulley upward, the first head pulley can be moved forward, namely the downstream side, in the conveyance direction; the sub-conveying portion includes a second tail pulley in the conveyance direction arranged on the upstream end side, a second head pulley arranged on the downstream end side, and an annular second belt installed between the second tail pulley and the second head pulley; the second head pulley also rotates by direct or indirect transmission of the rotary force from the conveyer power source, the second head pulley can circulate and drive the annular second belt by the rotation, and an upper surface of the second belt also constitutes the other part of the conveying surface in an upper section of the circulating second belt; the second tail pulley is pivotally supported by the operating frame and can move front and rear in the conveyance direction together with the operating frame; the sub-conveying portion includes a second length-adjusting pulley which is arranged on the inner side of the annular second belt and is installed on the second belt in the lower section of the circulating second belt; and the second length-adjusting pulley can be displaced in the vertical direction, by displacing the second length-adjusting pulley downward, the second head belt is pulled out downward to move the second tail pulley forward, namely downstream side, in the conveyance direction, and the second belt is moved back upward by displacing the second length-adjusting pulley upward to move the second tail pulley rearward, namely the upstream side, in the conveyance direction.

### Advantageous Effects of the Invention

The present invention could provide means for changing the seal pressure which forms the end-part seal on the film sheet. Particularly, the present invention could provide specific means for adjusting the seal pressure suitable for the packaging machine which performs box motion for the seal blocks (first and second constituting portions) .

Based on the aforementioned effect, the present invention described in claim 4 can ensure the relatively large section where the first and second constituting portions sandwich the film sheet, and timing for welding (sealing) and cutting of the film sheet can be taken easily. Thus, the present invention described in claim 4 does not require to control the operation so that the feed drive portion is strictly linked with the pinch drive portion.

Further, the present invention described in claim 4 can contribute to conveyance of the film sheet by movement of the first and second constituting portions in the aforementioned section.

Based on the aforementioned effect, the present invention described in claim 5 can handle also packaging of a product to be packaged with a relatively large vertical width (with a height) by drawing a substantially rectangular movement trajectory as indicated by the name of the box motion. That is, in a state of having been hardly moved front and rear at the rearmost in the front-rear direction, the both constituting portions approach to each other, and in a state of having been hardly moved front and rear at the foremost in the front-rear direction, the both constituting portions are separated from each other, whereby the movement trajectory can be made substantially rectangular.

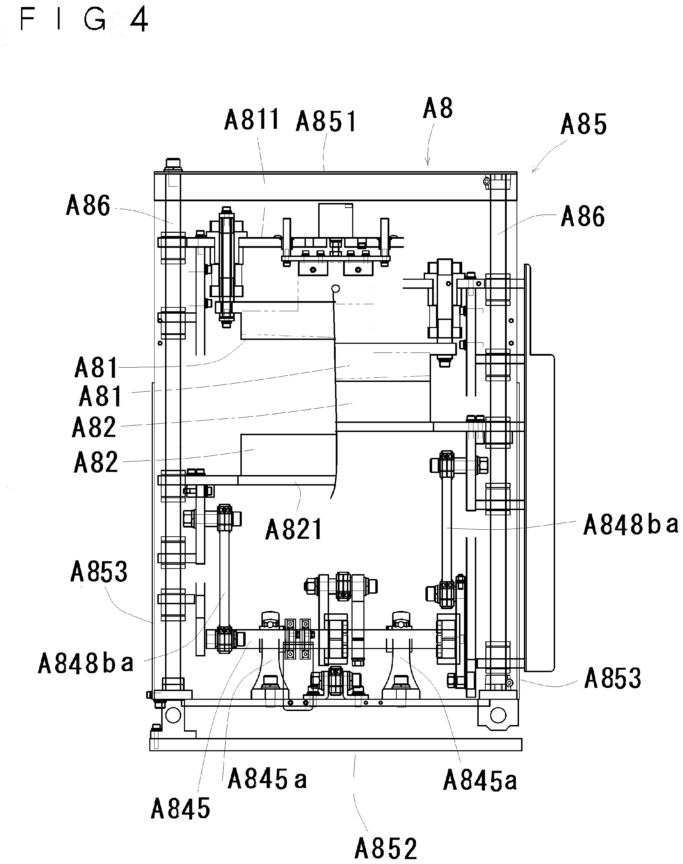

For example, in the packaging machine of Patent Document 2, though it is the box motion for the normal operation, the trajectory of the seal block does not draw a rectangle as long as Fig. 4A thereof is seen. Thus, it cannot be said that the packaging machine in Patent Document 2 is suitable for packaging of a product to be packaged having a relatively large height. Particularly in order to obtain a trajectory close to a circle drawn by the seal block of the packaging machine shown in Patent Document 2, timing of driving of the first servomotor (feed drive portion) have to be strictly linked with the second servomotor (pinch drive portion), which complicates the operation control of the both motors. Further, when the movement trajectories of the both seal blocks (both constituting portions) are circular, a contact point where the film sheet is sandwiched at the time of approaching the both seal blocks to each other becomes short section in front and rear, which is close to a point, and thus, the both servomotors are required to be controlled extremely strict. In this respect, in the present invention described in claim 4, as described, it is not necessary to control the operation so that feed drive portion is strictly linked to the pinch drive portion.

Further, in the present invention described in claim 5, similarly to the present invention described in claim 4, the section in which the first and second constituting portions sandwich the film sheet relatively largely can be secured and timing of welding (sealing) and cutting of the film sheet can be taken easily. Thus, in the present invention described in claim 5, it is not necessary to control the operation so that the feed drive portion is strictly linked to the pinch drive portion. Moreover, the present invention described in claim 5 can also contribute to the conveyance of the film sheet by movement of the first and second constituting portions in the aforementioned section.

In the present invention described in claim 6, on the basis of the aforementioned effect, regarding the pair of constituting portions which constitute the end-part seal portion and form the end-part seal with the film sheet sandwiched, specific means is provided such that the both constituting portions that can automatically open the both constituting portions does not allow to continue the state of seal formation on the film sheet. Therefore, in implement of the present invention described in claim 6, the film sheet does not have to be heated more than necessary, and occurrence of defective sealing due to heating can be avoided.

Particularly, in the present invention described in claim 6, it can provide specific means which enables control of automatically opening of the both constituting portions other than the movement of the both constituting portions contributing to the conveyance of the film sheet in the state where the film sheet is sandwiched, regarding the pair of constituting portions which constitute the end-part seal portion and form the end-part seal with the film sheet sandwiched. That is, in the packaging machine according to the present invention described in claim 6, the both constituting portions can be set so as to perform the separation operation between the both constituting portions independently of the movement in the front-rear direction along the conveyance direction.

As described above, in the present invention described in claim 6, since the control of opening and closing between the both constituting portions can be performed regardless of the conveyance state (position on the conveying path) of the product to be packaged, even in the case of packaging the products to be packaged having different sizes, it can be handled that a sensor which detects a positional deviation of the product to be packaged in the conveyed film sheet is provided on immediately close to the upstream side of a planned formation position (planned formation position P of the top seal, described above) of the end-part seal where the both constituting portions sandwich the film sheet in the conveyance direction without being restricted by the dimension (particularly, the length) of the product to be packaged with the largest size. That is, since the both constituting portions can open the space between the both constituting portions independently of the operation in the conveyance direction, even when a positional deviation is detected near the position P, it can be handled by immediately opening the space between the both constituting portions. Therefore, in the present invention described in claim 2, oversight of the aforementioned positional deviation can be suppressed, and occurrence of jamming of the product to be packaged can be prevented.

In the present invention described in claim 2, even when the positional deviation is detected immediately before the both constituting portions, the operation of sandwiching the film sheet between the both constituting portions (sealing operation) can be stopped. Such control can be realized that in the state where the sealing operation is stopped, packaging is automatically resumed when arrival of the product to be packaged without the positional deviation is detected by the detection portion, after the product to be packaged with the positional deviation is passed through the opened space between the both constituting portions.

As described above, in the present invention described in claim 2, control can be executed by the control portion such that the sealing operation (opening and closing operation of the both constituting portions) is resumed upon arrival of the product to be packaged at an appropriate position, after the space between the both constituting portions is opened, and the product to be packaged with the positional deviation is passed therethrough.

Each of the inventions described in claims 1 to 7 described above can obtain the aforementioned effects related to the seal-pressure adjustment during operation of the packaging machine, regardless of whether the sizes of the plurality of products to be packaged are the same or different.

On the other hand, according to the implementation of the present invention described in claim 8, the aforementioned effects can be obtained by automatically allocating the film sheet having the appropriate length to each of the products to be packaged and packaging that prevents the waste of the film sheet, particularly for the plurality of products to be packaged having different sizes. Needless to say, the present invention can be performed the packaging of the plurality of the products to be packaged having the same size by the packaging machine which automatically allocates the film sheet having the appropriate length to each of the products to be packaged, for the plurality of products to be packaged having different sizes.

The present invention described in claim 9 achieves the aforementioned effects particularly in the pillow packaging.

Further, in the present invention described in claims 10 to 12, the specific means which realizes the aforementioned "box-motion type" packaging machine which achieves the aforementioned effects can be provided.

In the present invention described in claim 11, presence or absence of the positional deviation of the product to be packaged can be detected immediately before sealing due to the both constituting portions by providing the position sensor on the operating frame.

Particularly in the present invention described in claim 11, a sub-power source is configured not only to be an electric motor rotated in one direction, but also capable of forward rotation and reverse rotation in the pinch drive portion, the forward rotation and reverse rotation of the sub-electric motor is transmitted by the link member for cutting-back to the main shaft, which serves as a base shaft of opening and closing of the both constituting portions, by rotating forward and rotating reverse the main shaft, the main shaft can be changed to the reverse rotation without rotating up to 180 degrees.

That is, in the present invention of claim 11, the both constituting portions can approach to and separate from each other without allowing the first mounting member to reach a bottom dead center (second mounting member at a top dead center). With regard to a gap between the both constituting portions generated when the both constituting portions are the closest to each other by not allowing to reach the bottom dead center (top dead center), it can be solved by providing each of the constituting portions on the operating frame through known biasing means such as a spring, or a damper and by setting such that the both constituting portions pushing each other, and as a result, the space between the both constituting portions can be closed by rotation with an angle slightly smaller than 180 degrees in the main shaft, and a pressing force (seal pressure) with which the film sheet is sandwiched can be adjusted by selection of the angle.

In the present invention, the aforementioned effects is achieved particularly by improvement of the end-part seal portion, and there is no need to employ two units or more of conveyers as the supply conveyer which supplies the product to be packaged to the packaging machine main-body or to modify the packaging machine main-body to adjust the length of the conveying path of the product to be packaged up to the end-part seal portion.

### Brief Description of the Drawings

[Fig.1] Fig.1a is an overall plan view of a packaging machine according to an embodiment of the present invention, Fig.1b is a substantial side view showing a state immediately before formation of an end-part seal on a film sheet with respect to the packaging machine shown in Fig. 1a, and Fig.1c is a substantial side view showing a state during formation of the end-part seal (with a space between both constituting portions closed) with respect to the packaging machine shown in Fig.1a.

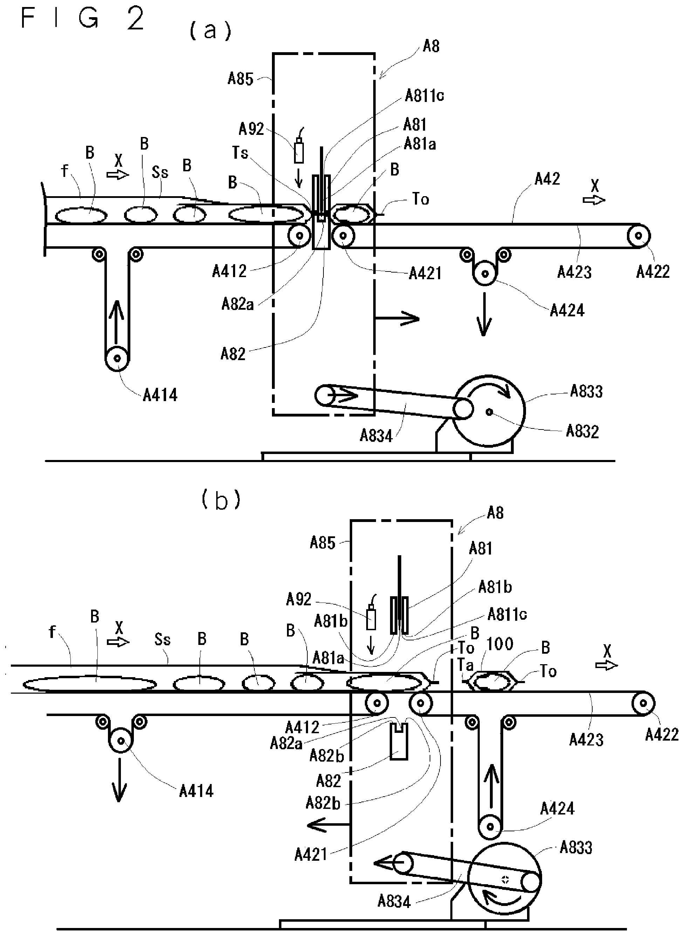

[Fig. 2] Fig.2a is a partially enlarged substantial side view showing a state during cutting of the film sheet (with the space between the both constituting portions closed) with respect to the packaging machine shown in Fig.1, and Fig.2b is a partially enlarged substantial side view showing a state to which cutting of the film sheet is completed (with the space between the both constituting portions opened) with respect to the packaging machine shown in Fig.1.

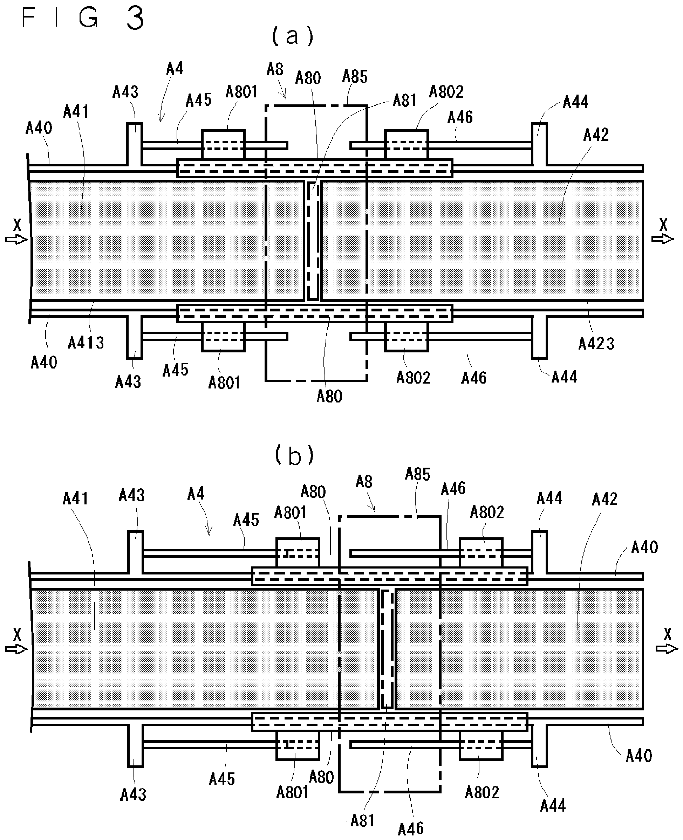

[Fig.3] Fig.3a is a substantial plan view of the packaging machine shown in Fig.2a, and Fig.3b is a substantial plan view of the packaging machine shown in Fig.2b.
[Fig.4] Fig.4 is a partially cut-away front view of an operating frame of the packaging machine shown in Fig.1 (opened and closed states of the both constituting portions are collected).

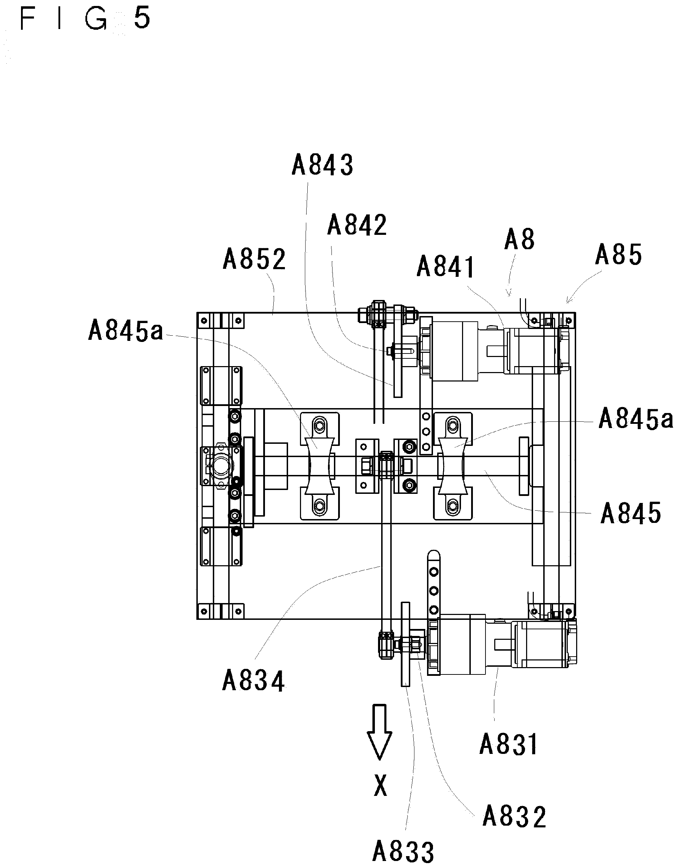

[Fig.5] Fig.5 is a plan view of the operating frame shown in Fig.4 with a part omitted.

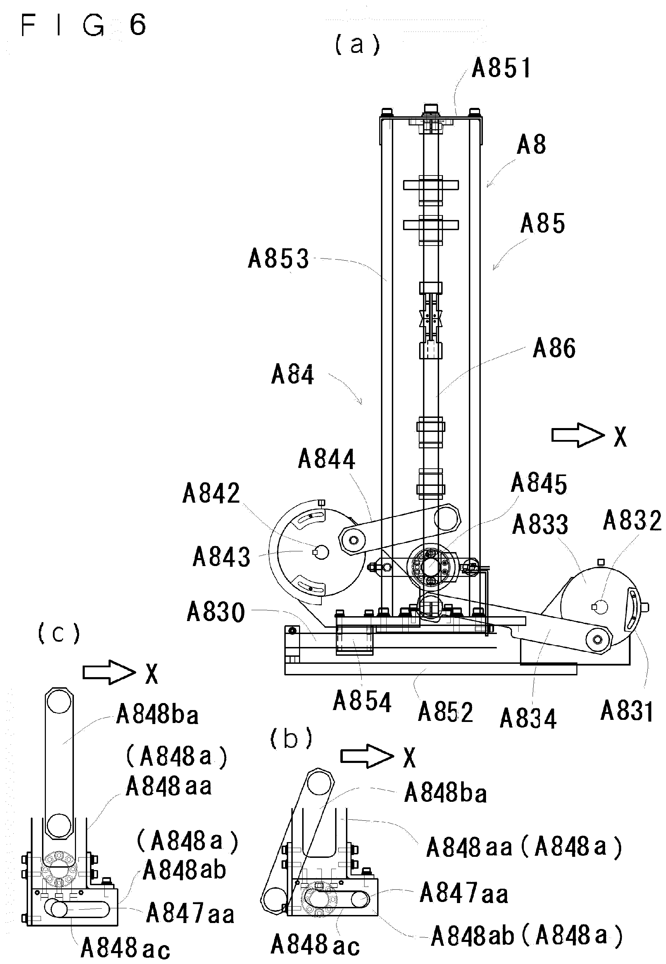

[Fig.6] Fig.6a is a side view of the operating frame shown in Fig. 4, Fig. 6b is a side view of an essential part when the space between the both constituting portions of the operating frame in Fig.6a is open, and Fig.6c is a side view of the essential part when the space between the both constituting portions of the operating frame in Fig.6a is closed.

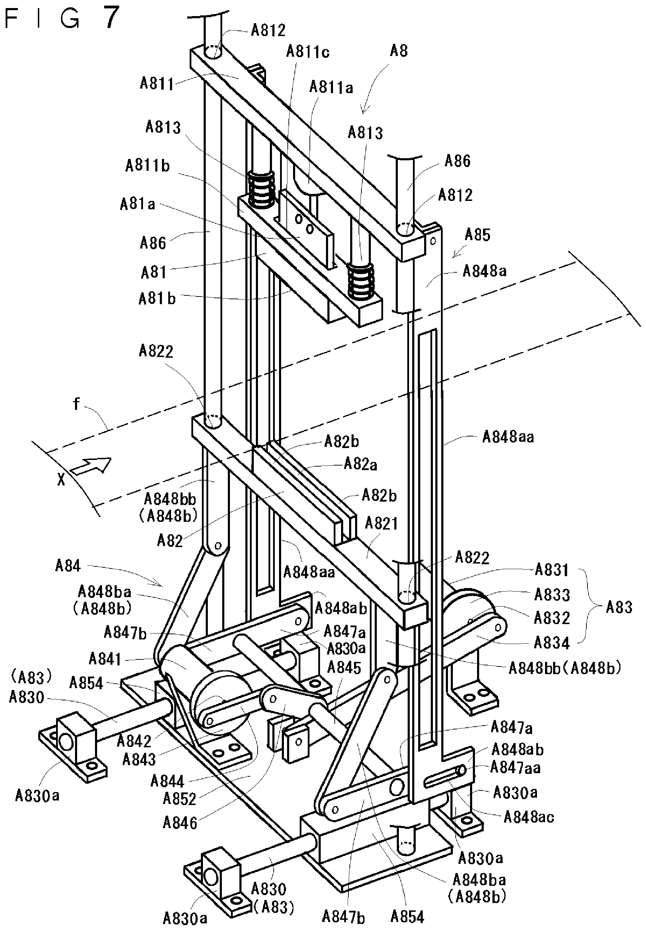

[Fig.7] Fig.7 is a partially cut-away substantial perspective view of the essential part showing a state where the space between the both constituting portions of the operating frame in Fig.4 is open.

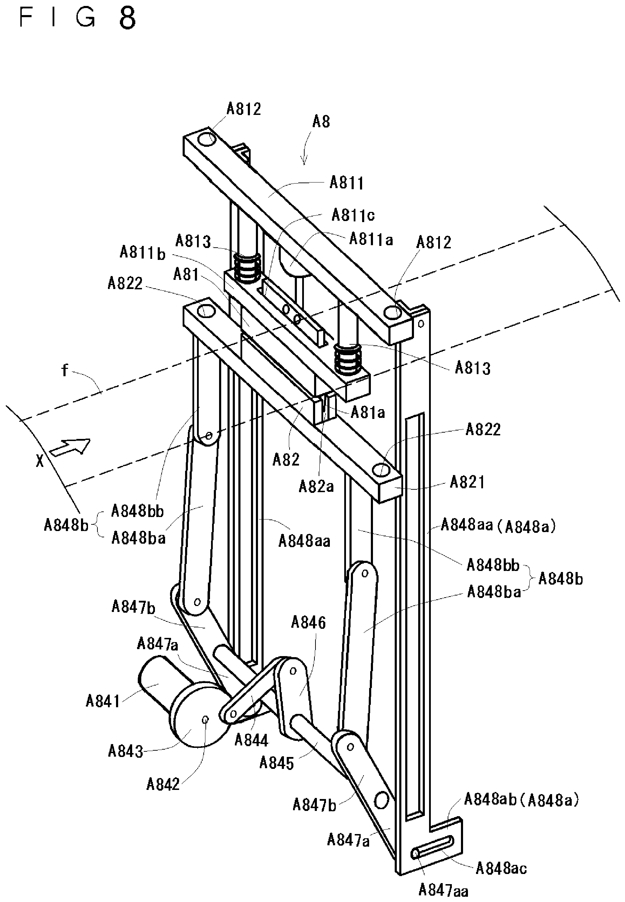

[Fig.8] Fig.8 is a partially cut-away substantial perspective view of the essential part showing a state where the space between the both constituting portions of the operating frame in Fig.4 is closed.

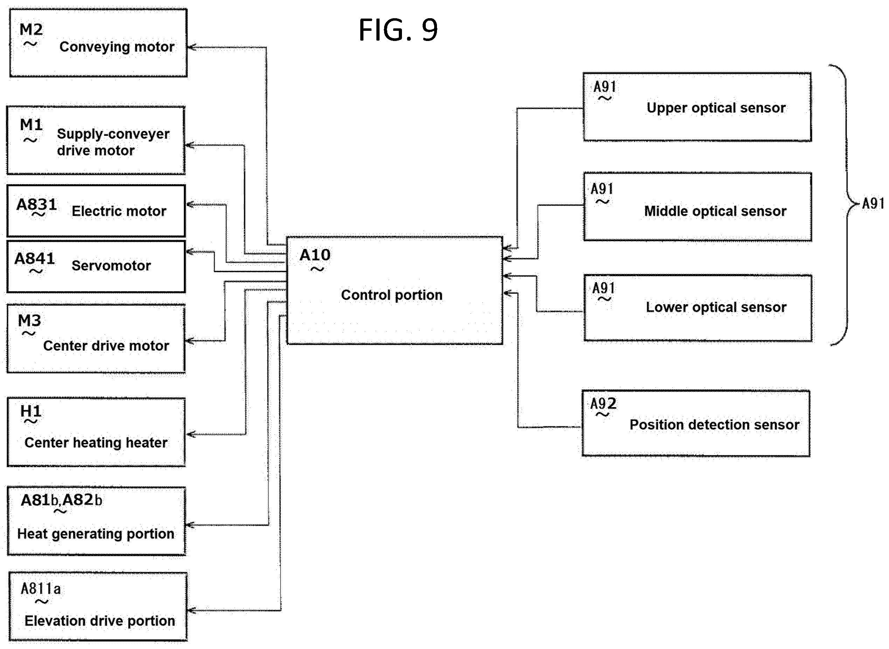

[Fig.9] Fig.9 is a block diagram showing each configuration of the packaging machine shown in Fig.1 with a control portion at a center.

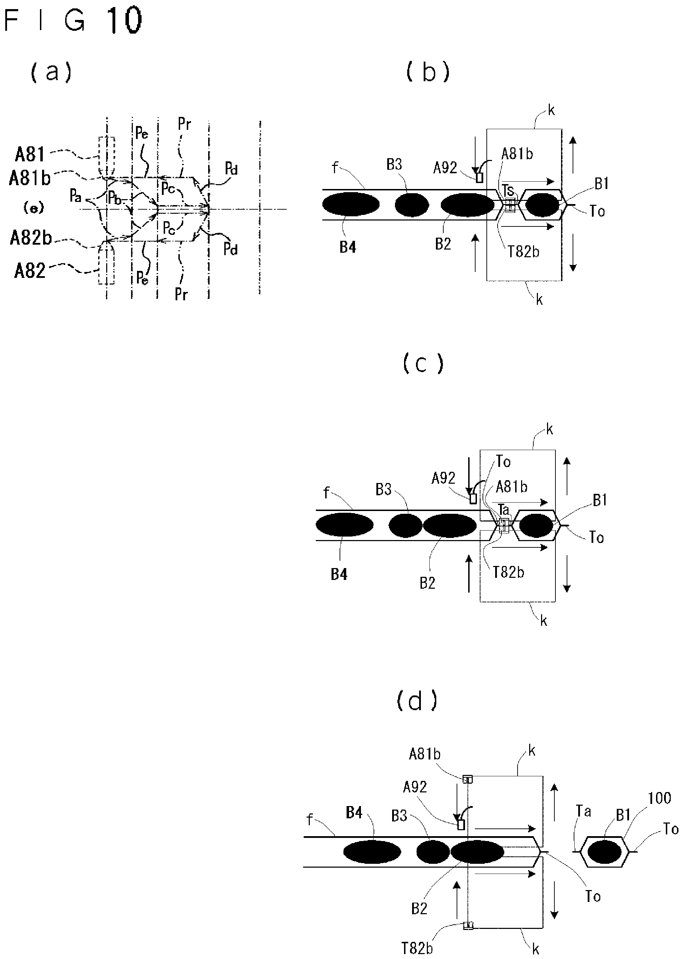

[Fig.10] Fig.10a is an explanatory view of an operation trajectory of a seal block on a side view during a normal operation and Fig.10b to Fig.10d are explanatory views on a side view of the operation of the essential part of the packaging machine shown in Fig.1 to Fig.9.

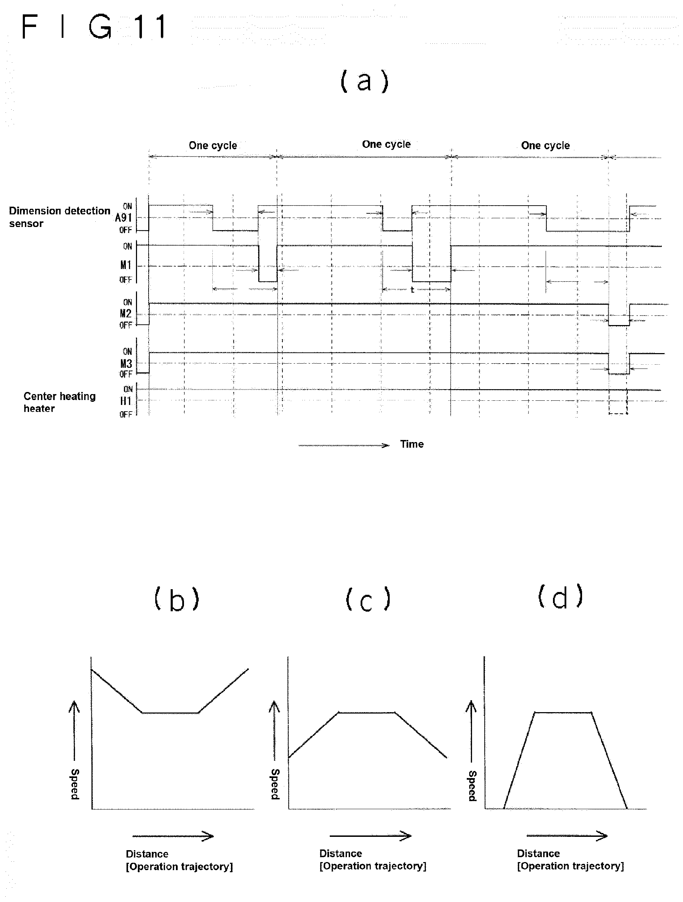

[Fig.11] Fig.11a is an explanatory diagram showing control states of each of a supply-conveyer drive motor M1, a dimension detection sensor A91, a conveying motor M2, a center drive motor M3, and a center heating heater H1, and Fig.11b to Fig.11d are explanatory diagrams showing a relationship between an operation speed and a distance of the operation pattern of the seal block performing the "box motion" when a film supply speed (film supply amount/per unit time) is constant, in which Fig. 11a is a graph showing each operation pattern for a short product to be packaged, Fig.11c for a product to be packaged longer than that in Fig.11a, and Fig.11B for a product to be packaged which is longer than that in Fig.11A and shorter than Fig.11C.
[Fig.12] Fig.12a is a substantially overall side view of a conventional (rotary type) packaging machine, Fig.12b is an explanatory diagram on a side view of a movement trajectory of a rotary-type seal block shown in the packaging machine in Fig.12a, and Fig.12c is an explanatory diagram on a side view of an essential part of the packaging machine showing a problem point of the rotary type seal block shown in Fig.12b.
[Fig.13] Fig.13a is an explanatory diagram on a side view of the movement trajectory of the box-motion type seal block, Fig. 13b is an explanatory diagram on a side view of an operating state of the seal block of the box-motion type packaging machine, and Fig.13c is an explanatory diagram on a side view of the operation trajectory when the seal block is open during a conveyance standby state, which cannot be realized by the conventional box-motion type packaging machine.
[Fig.14] Fig.14a to Fig.14c are explanatory diagrams on a side view of the packaging machine showing the problem point of the conventional packaging machine.

### Description of Embodiments

Hereinafter, preferred embodiments of the present invention will be described with reference to the drawings.

### (Overall Configuration)

A packaging machine A according to the present invention includes a packaging machine main-body A1 and a supply conveyer A2.

The packaging machine main-body A1 includes a sheet supply portion A3, a conveying conveyer A4, a bag former A5, a butted portion A6, a center seal portion A7, an end-part seal portion A8, a detection portion A9, and a control portion A10 (Fig.1 to Fig.10).

Here, an example in which the present invention is embodied on the packaging machine which performs packaging generally called a lateral (lateral-type) pillow packaging is shown. Hereinafter, a configuration of each portion will be described in detail.

### Supply Conveyer A2

The supply conveyer A2 supplies a product to be packaged B to be packaged to the packaging machine main-body A1 (Figs. 1A to 1C). In this example, the supply conveyer A2 is a belt conveyer. However, the supply conveyer A2 is not limited to the belt conveyer, but other known conveyers can be employed.

(A conveyer belt of) the supply conveyer A2 is driven by a motor (supply-conveyer drive motor M1).

A synchronous motor can be employed as the supply-conveyer drive motor motor M1, and motors other than the synchronous motor can be also employed as long as it can control ON-OFF in the control portion A, which will be described later.

The supply conveyer A2 sequentially supplies a plurality of the products to be packaged B of different sizes to the packaging machine main-body A1. As packaging of the plurality of products to be packaged B having different sizes, taking agricultural products as an example, sequential packaging of different types of products having different sizes and shapes, such as green onion, potato, Japanese radish, carrot can be cited, and even with the products of the same type, a case of sequential packaging of those with different sizes such as a plurality of root vegetables with different lengths can be also cited, for example.

The supply conveyer A2 sequentially supplies the products to be packaged B to the packaging machine main-body A1 with distances between the products to be packaged B.

### Sheet Supply Portion A3

The sheet supply device A3 pulls out a band-shaped film sheet f from a cylindrical film roll F formed by winding the band-shaped film sheet f in multiple layers and supplies to the conveying conveyer A4 (Figs. 1A to 1C).

Specifically, the sheet supply device A3 includes a pair of rollers A31 (pair of pull-out rollers A31) rotated by driving of the motor (conveying motor M2), the film sheet f is sandwiched and pulled out from the film roll F by the pair of rollers A31 and is supplied to an upstream end in a conveyance direction X of the conveying conveyer A4. A (center) axis of the pull-out roller A31 extends in a horizontal direction.

### Conveying Conveyer A4

The conveying conveyer A4 has the conveyance direction X of the conveying conveyer A4 with an upstream side of the conveying conveyer A4 as a rear side of the packaging machine main-body A1 and a downstream side of the conveying conveyer A4 as a front side of the packaging machine main-body A1 and conveys the film sheet f supplied from the sheet supply portion A3 from the rear to the front.

A longitudinal direction of the band-shaped film sheet f pulled out onto the conveying conveyer A4 and conveyed is along the conveyance direction X of the conveying conveyer A4. That is, the longitudinal direction of the film sheet f is the front-rear direction of the conveying conveyer A4 (packaging machine main-body A1).

The supply conveyer A2 is arranged on the rear of the packaging machine main-body A1 and sequentially places the plurality of products to be packaged B with the distance as described above on the pulled-out film sheet f on the upstream end (the bag former A5, which will be described later) of the conveying conveyer A4 of the packaging machine main-body A1.

The conveying conveyer A4 includes a main conveying portion A41, a sub-conveying portion A42, and a conveyer power source. The main conveying portion A41 and the sub-conveying portion 42 are driven by the conveyer power source.

An electric motor (motor) can be employed for the conveyer power source.

In this example, the conveying motor M2 which drives the sheet supply device A3 also serves as the conveyer power source. However, a dedicated motor other than the conveying motor M2, which is capable of interlocking (synchronizing) the sheet supply device A3 and the conveying conveyer, may be employed as the conveyer power source.

The sub-conveying portion A42 is located on the downstream side of the main conveying portion A41.

A gap is provided between the main conveying portion A41 and the sub-conveying portion A42.

The main conveying portion A41 includes a first tail pulley A411 arranged on the upstream end side in the conveyance direction X, a first head pulley A412 arranged on the downstream end side, and an annular first belt A413 installed between the both pulleys A411 and A412 (Figs. 1b and 1c and Figs. 2a and 2b).

The first head pulley A412 can rotate upon receipt of transmission of a direct or indirect rotational force from the conveyer power source. By means of the rotation of the first head pulley A412, the annular first belt A413 can be circulated and driven.

In the upper section of the circulating first belt A413, an upper surface of the first belt A413 constitutes a part (upstream side) of a conveying surface on which the product to be packaged B is placed and conveyed together with the film sheet f.

The first head pulley A412 is pivotally supported by an operating frame A85, which will be described later, and moves front and rear in the conveyance direction together with the operating frame A85.

Further, the main conveying portion A41 includes a first length-adjusting pulley A414 disposed inside the annular first belt A413 and on which the first belt A413 is installed in the lower section of the circulating first belt.

The first length-adjusting pulley A414 can be displaced in the vertical direction. The first length-adjusting pulley A414 pulls out the first belt A413 downward by displacing downward and can move the first head pulley A412 rearward, that is, the upstream side, in the conveyance direction X.

The first length-adjusting pulley A414 returns the first belt A413 upward by displacing upward and can move the first head pulley A412 froward, that is, the downstream side, in the conveyance direction X.

The sub-conveying portion A42 includes a second tail pulley A421 disposed on the upstream end side in the conveyance direction X, a second head pulley A422 disposed on the downstream end side, and an annular second belt A423 installed between the second tail pulley A421 and the second head pulley A422.

The second head pulley A422 can also rotate upon receipt of the transmission of the direct or indirect rotational force from the conveyer power source. By means of the rotation of the second head pulley A422, the annular second belt A423 can be circulated and driven.

In the upper section of the circulating second belt A423, an upper surface of the second belt A423 also constitutes another part (downstream side) of the conveying surface on which the product to be packaged B is placed and conveyed together with the film sheet f.

The second tail pulley A421 is also pivotally supported by the operating frame A85 and moves front and rear in the conveyance direction together with the operating frame A85.

It is preferable that the upper surface of the second belt A423 be located at the same height as the upper surface of the first belt A413 and extend substantially horizontally along the conveyance direction X with respect to the both belts A423, A413. However, only the upper surface at a position installed on the first head pulley A412 of the first belt A413 and the upper surface at a position installed on the second head pulley A422 of the second belt A423 may be of the same height, and the first belt A413 and the second belt A423 may be slightly inclined with respect to the horizontal. Moreover, the upper surface at the position installed on the first head pulley A412 of the first belt A413 may be at a position slightly higher than the upper surface at the position installed on the second head pulley A422 of the second belt A423.

Further, the sub-conveying portion A42 includes a second length-adjusting pulley A424 arranged inside the annular second belt A423 and on which the second belt A423 is installed in the lower section of the circulating second belt A423.

The second length-adjusting pulley A424 can be displaced in the vertical direction.

The second belt A423 is pulled out downward by displacing the second length-adjusting pulley A424, and the second tail pulley A422 can be moved forward in the conveyance direction X, that is, the downstream side.

The second belt A423 returns upward by displacing the length-adjusting pulley A424 upward, and the second tail pulley A422 can be moved rearward in the conveyance direction X, that is, the upstream side.

Since the second tail pulley A421 is pivotally supported by the operating frame A85, which will be described later, with distance in front and rear with respect to the first head pulley A412, the gap having a constant width which is not fluctuated is ensured between the main conveying portion A41 and the sub-conveying portion A42.

### Bag Former A5

The bag former A1 (former) sequentially curves the film sheet f in the width direction (horizontal direction) orthogonal to the longitudinal direction of the band-shaped film sheet f. The bag former A5 is provided on the upstream end of the conveying conveyer A4 (main conveying portion 41) .

Specifically, the bag former A5 is provided on the upstream end of the main conveying portion A41. The bag former A5 includes a pair of left and right standing plates A51 which joins left and right of the band-shaped film sheet 3 pulled out by the pull-out rollers A31 and curves the film sheet f into the U-shape, and a cutting-back plate A52 constituting a part of a rear part of the packaging machine main-body A1 (Fig.1a to Fig.1c).

The pair of standing plates A51 are provided on the left and right of the conveying surface with the conveying surface of the main conveying portion A41 between them and extend with respective inclination so as to gradually widen the gap between them upward from the conveying surface.

The distance between at least base ends of the both standing plates A51 is narrower than a left-right width of the band-shaped film sheet f. The cutting-back plate A52 directs the plate surface rearward from the packaging machine main-body A1 and protrudes from a space between the base ends of the both standing plates A51 to downward the conveying surface of the main conveying portion A41.

In the packaging machine main-body A1, the sheet supply portion A3 is arranged below the conveying conveyer A4 (main conveying portion A41), and the pull-out rollers A31 are located forward than the cutting-back plate A52 and the film roll F below the main conveying portion A41 of the conveying conveyer A4.

As described above, the film sheet f after being pulled out by the pull-out rollers A31 is further pulled out by driving of a pair of drive rollers A61 of the butted portion A6, which will be described later, and advances along the plate surface of the cutting-back plate A52, and passes through between the plate surface of the cutting-back plate A52 and the supply conveyer A2 to cut back forward onto the conveying surface of the main conveying portion A41, and then, the film sheet passes between the both left and right standing plates A51 together with the product to be packaged B sequentially supplied from the supply conveyer A2 and is supplied onto the conveying surface of the main conveying portion A41.

The supply conveyer A2 sequentially places each of the products to be packaged B onto the film sheet f with a distance between the preceding product to be packaged B and the subsequent product to be packaged B on the main conveying portion A41 of the conveying conveyer A4 as described above.

The both standing plates A51 of the bag former A5 direct the left and right end sides of the film sheet f pulled out and on which the product to be packaged B is placed so as to form the film sheet f into the U-shape as described above and wraps the product to be packaged B with the film sheet f.

The pair of both drive rollers A61 of the butted portion A6, which will be described later, and a pair of heating rollers A71 of the center seal portion A7 overlap and sandwich the left and right end parts of the film sheet f curved in the U-shape and directed upward and rotate, whereby the product to be packaged B on the conveying surface of the main conveying portion A41 is brought into a wrapped state and further pulls out the film sheet f as described above.

Though not shown, it is preferable that a film guide which regulate a position of the film sheet f upper end be provided between the bag former A5 and the butted portion A6 in the conveyance direction X so that the film sheet f reversely rotated by the bag former A5 (cutting-back plate A52) be able to smoothly cover the product to be packaged B.

### Butted Portion A6

The butted portion A6 is constituted by the pair of left and right drive rollers A61 which is arranged above the conveying surface of the main conveying portion A41 and closer to the downstream side in the conveyance direction X than the bag former A5, sandwiching the both left and right end parts of the film sheet f curved in the U-shape into the overlapping state, that is, a butted cylindrical shape and then, further pulling out the film sheet f to the downstream side in the conveyance direction X. The butted portion A6 is disposed at a center part in a width direction of the main conveying portion A41 on a plan view of the packaging machine main-body A1, and rotating shafts of the both drive rollers A61 extend vertically.

### Center Seal Portion A7

The center seal portion A7 includes, as a pair of heating rollers A71, a pair of left and right rollers which incorporate a heating heater (center heating heater H1) disposed above the conveying surface of the main conveying portion A41 and closer to the downstream side in the conveyance direction X than the butted portion A6. The pair of heating rollers A71 are located immediately front of the pair of drive rollers A61, and rotating shafts of the both heating rollers A71 extend vertically. The heating rollers A71 sandwich and heat the butted part of the film sheet f to seal the butted part of the film sheet f. The sealed part of the film sheet f is a center seal Ss of the pillow packaging and extends along the longitudinal direction of the film sheet f (Figs. 1a to 1c and Figs. 2a and 2b).

The center heating heater H1 is controlled by a control portion A10 (Fig. 9), which will be described later, so that the pair of heating rollers A71 can maintain a heated state at an arbitrary temperature. Specifically, the pair of heating rollers A71 can be implemented as having temperature sensors. In addition, instead of being controlled by the control portion A10, the center heating heater H1 may be automatically turned ON/OFF by a thermostat to maintain a temperature suitable for sealing.

As the heating rollers A71, other than an electric heater, those of a type capable of sealing such as ultrasonic, induction heating called IH, or far-infrared may be employed, for example.

In this example, the drive rollers A61 of the butted portion A6 and the heating rollers A71 of the center seal portion A7 are driven by receiving transmission of a driving force from the same motor (center drive motor M3), respectively.

It is preferable that positions in the vertical direction of the drive rollers A61 of the butted portion A6 and the heating rollers A71 of the center seal portion A7 may be adjusted. For example, each of the drive rollers A61 and the heating rollers A71 is mounted on a support member whose vertical positions can be changed (not shown). Particularly, it is suitable that each of the drive rollers A61 and the heating rollers A71 is mounted on the same support member so that the vertical positions of the heating rollers A71 can be changed integrally with the drive rollers A61.

The support member may be configured so as to automatically move up and down in accordance with the height of the product to be packaged B detected by the detection portion A9 (dimension detection sensor A91), which will be described later, but a left-right width of the film sheet f is constant, and even when the height of the upper end of the film sheet f which is curved depending on the size of the product to be packaged to be wrapped is slightly changed, there is no particular necessity to largely change the height of the support member in general and thus, before operation of the packaging machine A, the height of the support member may be adjusted based on an average height of the plurality of products to be packaged B having different sizes, or a median value of the height of the plurality of products to be packaged B.

The aforementioned adjustment of the height can be implemented by providing an adjustment knob for adjusting the height adjustment of the support member on the support member (not shown).

In the film sheet f having relatively large thickness or strength, the center seal Ss, which is formed by sealing the butted part of the film sheet f, normally stands up like a comb immediately after formation on an upper part of the curved and rounded film sheet f (Figs. 1a to 1c and Figs. 2a and 2b) . Though not shown, it is preferable that a pressing member which laterally lays down the standing center seal Ss in contact with the conveyed center seal Ss be provided on the downstream side of the pair of heating rollers A71 in the conveyance direction X.

The pressing member may be arranged at a fixed position in the conveyance direction X, and such a member that is biased downward by an elastic member such as a spring and can follow the upper part of the film sheet f moving-in by the rollers capable of vertical movement and conveyance of the other film sheets f may be employed.

### End-Part Seal Portion A8

The end-part seal portion A8 is provided on the downstream side of the center seal portion A7 (the pressing member when the aforementioned pressing member is provided) in the conveyance direction X, and the end-part seal portion A8 sequentially forms an end-part seal Ts which seals front and rear of a packaged body 100 on the curved film sheet f on which the center seal Ss has been formed by sealing a space between the preceding product to be packaged B and the subsequent product to be packaged B (Figs. 1 to 8).

The end-part seal portion A8 includes an upper seal block A81, which is the first constituting portion, (corresponding to an "upper seal block" in the claims), a lower seal block A82, which is a second constituting portion (corresponding to a "lower seal block" in the claims), a feed drive portion A83, a pinch drive portion A84, and the operating frame A85.

The operating frame A85 is a frame body having a substantially rectangular shape in a front view that connects the main conveying portion A41 and the sub-conveying portion A42 and constitutes a gate through which the product to be packaged B passes when transferring from the main constituting portion A41 to the sub-conveying portion A42. That is, when transferring from the main conveying portion A41 to the sub-conveying portion A42, the product to be packaged B passes through a space inside the operating frame A85, which is a rectangular frame body.

The operating frame A85 is driven by the feed drive portion A83 and can move front and rear along the conveyance direction X. That is, the operating frame A85 can move front and rear together with the first head pulley A412 and the second tail pulley A421 which are pivotally supported on the operating frame A85 with respect to the immovable first tail pulley A411 and the second head pulley A422 in the conveyance direction X.

Specifically, the first head pulley A412 and the second tail pulley A421 are transferred to left-right side parts A853, which will be described later, of the operating frame A85, at a distance from each other in the front-rear direction, and left and right ends of each of the center shafts of the first head pulley A412 and the second tail pulley A421 are pivotally supported on the both side parts A853. Note that, in Figs. 1 to 3, the operating frame A85 is shown by a one-dot chain line only by a position, and each member, which will be described later, provided on the operating frame A85 is omitted in order to avoid cumbersomeness of the drawing.

Details of each member provided on the operating frame A85 are shown in Figs. 4 to 6. Further, Fig. 7 and Fig. 8 also show each member provided on the operating frame A85, but the main purpose is to explain operations of the upper seal block A81 and the lower seal block A82 and thus, they are simplified more than the actual.

Further, the packaging machine main-body A1 (conveying conveyer A4) includes a guide rail A40 which does not change a front-rear position (not move) with respect to the operating frame which moves front and rear as described above (Figs.3a and 3b). A pair of the guide rails A40 are provided on left and right of the conveying conveyer A4 and extend along the conveyance direction X. A guided portion A80 which is guided by the guide rails A40 is provided on the operating frame A85. A channel material having a U-shaped or L-shaped cross section can be employed for the guided portion A80.

The guided portion A80 is fitted in the guide rail A40 and can move front and rear along the guide rail A40. In this example, each of the guide rails A40 includes a pair of first protruding portions A43 protruding to left and right closer to the upstream side than the operating frame A85 and a pair of second protruding portions A44 protruding to left and right closer to the downstream side than the operating frame A85.

A first guide rod A45 with a distance from the guide rail A40 and extending toward the upstream side in the conveyance direction X is provided on each of the first protruding portions A43. A second guide rod A46 with a distance from the guide rail A40 and extending toward the downstream side in the conveyance direction X is provided on each of the second protruding portions A44.

The guided portion A80 includes a first receiving portion 801 that includes a penetrating portion protruding left and right from a rear-part side surface of each of the guided portions A80 and through which the first guide rod A45 is penetrated and a second receiving portion A802 that includes a penetrating portion protruding left and right from a front-part side surface of each of the guided portions A80 and through which the second guide rod A46 is penetrated.

When the guided portion A80 moves front and rear together with the operating frame A85 by the front and rear movement of the operating frame A85, the first receiving portion A801 can move front and rear along the first guide rod A45, while the second receiving portion A802 can move front and rear along the second guide rod A46, and they can guide movement of the operating frame A85.

Regarding the guiding for front and rear movement of the operating frame A85, a feed guide A830, which will be described later, also guides the front and rear movement of the operating frame A85. In this example, the feed guide A830 guides a bottom part A852, which will be described later, of the operating frame A85, and the first guide rod A45 and the second guide rod A46 perform guiding at positions higher than the bottom portion (position at the substantially same height as that of the conveying surface of the product to be packaged B).

However, only the feed guide A830 may be provided without providing the first guide rod A45 or the second guide rod A46, or only the first guide rod A45 and the second guide rod A46 may be provided without providing the feed guide A830. In the example in which the feed guide A830 is not provided, the first guide rod A45 and the second guide rod A46 correspond to the "feed guide" in the claims.

Actually, it is preferable that the both first guide rod A45 and the second guide rod A46 be provided together with the feed guide A830.

The operating frame A85 is a frame body having a substantially rectangular shape on a front view as described above and is configured by a top part A851 having a rectangular upper side, the bottom part A852 (described above) having a rectangular lower side, and a pair of left-right side parts A853 (described above) having the rectangular sides (Fig. 4, Fig. 5, and Fig. 6a).

The top part A851 extends in the lateral horizontal direction above the conveying surface of the conveying conveyer A4, the bottom part A852 extends in the lateral horizontal direction below the conveying conveyer A852, and the both left-right side parts A853 extend in a vertical updown direction on the left and right of the conveying conveyer A4.

Further, the operating frame A85, which is a frame body, includes a pair of left and right vertical guides A86 extending vertically in a space inside the frame body and on the left and right of the conveying conveyer A4 (Fig. 4, Fig. 6a, and Fig. 7). Upper ends of the both vertical guides A86 are fixed to the top part A851 of the operating frame A851, and lower ends of the both vertical guides A86 are fixed to the bottom part A852 of the operating frame A85.

In Fig. 7, the top part A851 and the both side parts A853 of the operating frame A85 are omitted, and the vertical guide A86 is depicted also in a partially cut-away state. In Fig. 8, in order to show a configuration provided in the space inside the operating frame A85, the operating frame A85 itself, which is a frame body, is omitted.

In the inner space of the operating frame A85, the upper seal block A81 is arranged above the lower seal block A82.

Specifically, both the upper seal block A81 (first constituting portion) and the lower seal block A82 are transferred to a space between the both left and right vertical guides A86, guided by the both vertical guides A86, and operated front, up and down by the pinch drive portion A83 to open and close the space between the both seal blocks A81 and A82 (Fig.2a, 2b, Fig.4, Fig.7, and Fig.8).

In Fig.4, in a center spot in the vertical direction, a left half shows a state where the space between the both seal blocks A81 and A82 is open, while a right half shows a state where the space between the both seal blocks A81 and A82 is closed.

A structure for mounting the both seal blocks A81 and A82 to the vertical guide A86 will be described later in detail.

In a state where at least the space between the both seal block A81 and seal block A82 is open, the upper seal block A81 is located above the conveying surface of the conveying conveyer A4, while the lower seal block A82 is arranged below the conveying surface.

A cutting blade A81a extending to left and right is provided on one of opposing surfaces of the both seal blocks A81 and A82, that is, on a lower surface of the upper seal block A81. On the lower surface, a heat generating portion A81b extending to left and right is provided on each of front and rear with the cutting blade A81a as a boundary.

A blade receiving portion A82a extending to left and right is provided on the other one of the opposing surfaces of the both seal blocks A81 and A82. Further also on the other surface, a heat generating portion A82b extending to left and right is provided on each of the front and rear with the blade receiving portion A82a as a boundary.

An electric heater can be employed for the heat generating portions A81b and A82b. For the heat generating portions A81b and A82b, known means other than the electric heater capable of heat sealing the film sheet f may be employed.

The film sheet f on which the center seal Ss is formed is sandwiched between the opposing surfaces of the both seal blocks A81 and A82, the film sheet f is heated by heat generation of each of the heat generating portions A81b and 82B of the both opposing surfaces so as to form the end-part seal Ts, and the film sheet f is cut and divided into front and rear by the cutting blade A81a and the blade receiving portion A82a at the end-part seal Ts (Figs.2a, 2b).

A front side of the end-part seal Ts which was cut and divided is a tail seal Ta of the packaged body 100 formed by cutting and dividing, and a rear side of the end-part seal Ts which was cut and divided is a top seal To of the film sheet f, which is to be the subsequent packaged body 100.

In addition, the upper seal block A81 and the lower seal block A82 disposed in the inner space of the operating frame A85, which is a frame body, are located between the conveying portion A41 and the sub-conveying portion A42 in the conveyance direction X (Figs.1a to 1c, Figs.2a and 2b, and Figs.3a and 3b).

In this example, the upper seal block A81 is mounted via an upper mounting member A811 and the lower seal block A82 is mounted via a lower mounting member A821 on the both vertical guides A86, respectively (Fig.7).

Specifically, the upper mounting member A811 (first mounting member) with the lateral horizontal direction as the longitudinal direction is extended to the both vertical guides A86, and the lower mounting member A821 similarly with the lateral horizontal direction as the longitudinal direction is extended to the both vertical guides A86. Through holes A812 and A822 penetrating vertically are provided near left and right end parts of the upper mounting member A811 and the lower mounting member A821, and each of the vertical guides A86 formed having a rod shape is passed through the through holes A812, A822 so that the upper mounting member A811 and the lower mounting member A821 can move vertically along the both vertical guides A86.

In this example, the upper seal block A81 is mounted on a lower part of the upper mounting member A811 via a pair of left and right suspensions A813 (coilover in this example).

The suspension A813 converges (damps) periodic vibration of the upper seal block A81 as a damper, that is, as a shock absorber. Further, the suspension A813 can be elastically deformed as a snapping member and biases the upper seal block A81 toward the lower seal block A82.

In this example, the upper seal block A81 is provided on a lower surface of a plate-shaped or rod-shaped mounting base body A811b whose longitudinal direction is the horizontal direction, and distal ends (lower ends) of the both suspensions A813 are mounted on an upper surface of the mounting base body A811b.

On the other hand, the lower seal block A82 is mounted on an upper part of the lower mounting member A821 (second mounting member) whose the longitudinal direction is the horizontal direction. In this example, the lower seal block A82 is directly provided on the upper surface of the lower mounting member A821.

The feed drive portion A83 includes the aforementioned feed guide A830, a motor, which is a main motor A831, a rotation plate A833 provided on a rotating shaft A832 and rotated, and a link member A834 for feeding operation (Figs.2a, 2b, Fig.5, Fig.6a, and Fig.7).

The main motor A831 is an electric motor having the rotating shaft A832 extending to left and right in this example. Hereinafter, the main motor A831 will be referred to as the electric motor A831 as necessary. The electric motor A831 corresponds to the "main power source" in the claims and is fixed to an immovable portion (a portion not moving front and rear) of the packaging machine main-body A1 (conveying conveyer A4) with respect to the operating frame A85 that moves front and rear or to a floor on which the packaging machine main-body A1 is installed. Therefore, even if the operating frame A85 moves front and rear along the conveyance direction X, the moving electric motor A831 is not moved in any direction.

One end part of the link member A834 for feeding operation is pivotally supported by the operating frame A85, and the other end part of the link member A834 for feeding operation is pivotally supported by the rotation plate A833 at a position apart from a center of rotation of the rotation plate A833, that is, an eccentric position from the center, whereby the link member A834 for feeding operation connects the operating frame A85 and the rotation plate A833.

The feed drive portion A83 pushes and pulls the operating frame A85 along the first guide rod A45 and the second guide rod A46 (feed guides) by the rotation of the rotation plate A833 due to the electric motor A831 with a direction opposite to the conveyance direction X as an outward path and the same direction of the conveyance direction X as a return path to reciprocate the operating frame A85 (Figs.2a and 2b).

A guide receiving portion A854 to be fitted in the feed guide A830 is provided on the bottom part A852 of the operating frame A85 (Fig.6a and Fig.7).

The feed guide A830 is fixed to the immovable part (a part not moving front or rear) of the packaging machine main-body A1 (conveying conveyer A4) with respect to the operating frame A85 that moves front and rear or the floor on which the packaging machine main-body A1 is installed and extends front and rear.

The guide receiving portion A854 moves front and rear together with the operating frame A85 along the feed guide A830, and the front and rear movement of the operating frame A85 is guided by the feed guides A830 as described above.

In this example, the guide receiving portion A854 is provided near each of the left and right ends of the bottom part A852 on the upper surface of the bottom part A852 of the operating frame A85 and includes a penetrating portion penetrating front and rear. The feed guides A830 are a pair of left and right rod-shaped bodies and passed through the penetrating portions of the guide receiving portion A854 and extend front and rear, respectively. A distal end and a rear end of each of the feed guides A830 is fixed to the immovable part or the floor by a Fixed portion A830a fixed to the immovable part of the packaging machine main-body A1 (conveying conveyer A4) or the floor.

The pinch drive portion A84 includes a motor serving as a sub-motor A841, a rotary plate A843 provided on a rotary shaft A842, a link member A844 for cutting-back, a main shaft A845 extended in the horizontal direction toward the inner space of the operating frame A85, an arm A846 for cutting-back provided on the main shaft A845, two first arms A847a provided on the main shaft A845, a pair of left and right first connecting portions A848a coupling each of the first arms A847a to the upper seal block A81, two second arms A847b provided on the main shaft A845, and a pair of left and right second connecting portions A848b coupling each of the second arms A847b to the lower seal block A82.

The sub-motor A841 is a servomotor provided with the rotary shaft A842 extending to the left and right in this example. Hereinafter, the sub-motor A841 will be referred to as the servomotor A841 as required.

The servomotor A841 is provided on the operating frame A85 and rotates (forward rotation) or reversely rotates (reverse rotation) the rotary shaft A842. The servomotor A841 corresponds to the "sub power source" described in the claims and is a motor separate from the electric motor A831 (main power source).

In this example, the sub-motor A841 may be any motor that can rotate or reversely rotate the rotary plate A853 at a predetermined rotation angle, and any known motors other than the aforementioned servomotor may be employed, and a stepping motor or a linear motor, for example, may be employed as the sub-motor A841. That is, the sub-motor A841 may be a motor that can control a rotation range. When the sub-motor A853 is used as a linear motor, the rotary plate A843 may be rotated, or the both seal blocks A81, A82 may be directly moved linearly.

The one end of link member A844 for cutting-back is pivotally supported by the rotary plate A853 at a position apart from the rotation center of the rotary plate A853, that is, an eccentric position from the center.

The main shaft A845 is pivotally supported by the operating frame A85 and can be rotated. In this example, the main shaft A845 is pivotally supported on the bottom part A852 of the operating frame A85 via a pair of left and right bearings A845a (Fig.4 and Fig.5). In addition, both end parts of the main shaft A845 may be pivotally supported by the side parts A853 of the operating frame A85.

The bearing A845a is omitted in Fig.7 and Fig.8 in order to avoid complication of the figure.

Moreover, as described above, each part is drawn in a more simplified manner than actuality for the main purpose of explanation on operations of the both seal blocks A81, A82 in Fig.7 and Fig.8. In order to realize smooth and stable operations of the operating frame A85 and the both seal blocks A81 and A82, it is preferable that guides and guiding means for operations of each part be provided and embodied in actuality other than the feed guide A830 and the guide receiving portion A854, the guide rail A40 and the guided portion A80, the first and second guide rods A45, A46 and the first and second receiving portions A801, A802, the vertical guide 86 and the upper and lower mounting members A811, A821 shown in Fig.7 (Fig.7, Figs.3a and 3b).

The arm A846 for cutting-back described above is provided on the main shaft A845 and extends in a direction intersecting the direction in which the main shaft A845 extends as described above, and has its end part is pivotally supported on the other end of the link portion A844 for cutting-back (Fig.7 and Fig.8).

Both of the two first arms A847a are provided on the main shaft A845 at positions different from that of the arm A846 for cutting-back with respect to the horizontal direction and extend in the direction intersecting the direction in which the main shaft A845 extends as described above. One of the two first arms A847a is provided near the left end of the main shaft A845 extending to left and right, while the other of the two first arms A847a is provided near the right end of the main shaft A845 extending to left and right.

In this example, each of the second arms A847b is provided at the same position as those of the first arms A847b in the horizontal direction of the main shaft A845 and extends in a direction opposite to those of the first arms A847b. That is, the second arm A847b extends at an angle of approximately 180 degrees from the fist arm A847a on an outer peripheral surface of the main shaft A845.

As shown in Fig. 7, the present invention can be embodied with one end side of the rod-shaped body or the plate-shaped body formed on the main shaft A845 in a state where a center part in the longitudinal direction of the main shaft A845 is penetrated as the first arm A847a and the other end side of the rod-shaped body (plate-shaped body) as the second arm A847b. However, it is not limited to the configuration of a pair of the first arm A847a and the second arm A847b by one rod-shaped body (plate-shaped body). The second arms A847b may be provided at different positions in the horizontal direction of the main shaft A845 with respect to the first arms A847a, or the angle between the first arm A847a and the second arm A847b may be an obtuse angle other than the aforementioned 180 degrees.

Each of the first connecting portions A848a has one end connected with the distal end part of each of the first arms A847a and the other end mounted on the upper seal block A81 (first constituting portion).

In this example, each of the first connecting portions A848a is not directly connected to the upper seal block A81, but the other end of each of the first connecting portions A848a is mounted on the upper mounting member A811 on which the upper seal block A81 is provided.

In detail, the first connecting portion A848a is configured by a vertical part A848aa extending vertically and having an upper end fixed near the left-right end parts of the upper mounting member A811, and a lateral part A848ab that extends from a lower end of the vertical part A848a and extends in the front-rear direction (back in the front-rear direction in this example) from the lower end, and the first connecting portion A848a presents a vertically long L-shape in a side view of the operating frame A85 (Figs.6b and 6c, Fig.7, and Fig.8).

A slide guiding portion A848ac extending front and rear along the longitudinal direction of the lateral part A848ab is provided on the lateral part A848ab. In this example, the slide guiding portion A848ac is a long hole penetrating the lateral part A848a to left and right and extending front and rear along the longitudinal direction of the lateral part A848ab but may be formed as a groove extending front and rear along the longitudinal direction of the lateral part A848ab.

A guided portion A847aa which is guided by the slide guiding portion A848ac is provided on the distal end part of the first arm A847a.

In this example, the guided portion A847aa is a projection inserted into the slide guiding portion A848ac, which is a long hole. The guided portion A847aa can be displaced in the front-rear direction in which the slide guiding portion A848ac extends in the slide guiding portion A848ac with rotation and reverse rotation of the main shaft A845.

Regarding each of the second connecting portions A848b, one end is pivotally supported by the distal end part of each of the second arms A847b, while the other end is mounted on the lower seal block A82 (second constituting portion).

In this example, each of the second connecting portions A848b is configured by a connecting link member A848ba and a plate-shaped lower protruding piece A848bb provided on a lower surface of the lower mounting member A821 and protruding downward.

One end of the connecting link member A848ba is pivotally supported on the distal end part of the second arm A847b, while the other end of the connecting link member A848ba is pivotally supported on the lower end part of the lower protruding piece A848bb.

When a pivotally supported position of the link member A844 for cutting-back in the rotary plate A853 is the farthest from the main shaft A845, an included angle between the link member A844 for cutting-back and the arm A846 for cutting-back is the largest, and the included angle is 180 degrees of an obtuse angle close to 180 degrees in this example (Fig.7). At this time, the upper seal block A81 is located at the highest movable point in the vertical direction, a distal end side of the first arm A847a is directed to substantially the same direction as the (front-rear) direction in which the lateral part A848ab extends (Fig.7), and a slide portion A847aa is located at the farthest from the vertical part A848aa in the longitudinal direction of the lateral part A848ab in the slide guiding portion A848ac (Fig.6b and Fig.7).

On the other hand, when the pivotally supported position of the link member A844 for cutting-back in the rotary plate A843 is the closest to the main shaft A845, the included angle between the link member A844 for cutting-back and the arm A846 for cutting-back is the smallest, and the included angle is a sharp angle in this example (Fig.8). At this time, the upper seal block A81 is positioned at the lowest movable point in the vertical direction, the distal end side of the first arm A847a is inclined downward with respect to the lateral part A848ab extending to front and rear (Fig.8), and the slide portion A847aa is positioned the closest to the vertical part A848aa in the longitudinal direction of the lateral part A848ab in the slide guiding portion A848ac (Fig.6c).

The rotary plate A843 rotates with the rotary shaft A842 by rotation of the servomotor A841. The position where the link member A844 for cutting-back is pivotally supported on the rotary plate A843 is displaced in a circumferential direction of the rotary plate A846. For example, in the servomotor A841, the position where the link member A844 for cutting-back is pivotally supported on the rotary plate A853 is displaced from the aforementioned farthest state from the main shaft A845 (Fig. 7) toward the aforementioned closest position (Fig. 8) by the rotation of the servomotor A841.

With the aforementioned displacement of the link member A844 for cutting-back, the vertical part A848a is pulled downward by the guided portion A847aa of the first arm A847a, the upper seal block A81 is lowered with the upper mounting member A811, and at this time, the guided portion A847aa is circulated by movement of the first arm A847a turned due to the rotation of the main shaft A845, and the guided portion A847aa is displaced rearward in the front-rear direction in which the slide guiding portion A848ac extends as described above with respect to the slide guiding portion A848ac.

Moreover, with the aforementioned displacement of the link member A844 for cutting-back, the second arm A847b is turned and increases an angle between the second arm A847b and the connecting link member A848ba, whereby the connecting link member A848ba is pushed up, the lower protruding piece A821 is pushed upward by the pushing-up of the connecting link member A848ba, and the lower seal block A82 is raised with the lower mounting member A821 (Figs.6b, 6c and Fig.8).

When the pivotally supported position reaches the position which is the closest from the main shaft A845 by the displacement of the link member A844 for cutting-back, the upper seal block A81 reaches the lowest point that could be lowered, the lower seal block A82 reaches the highest point that could be raised, the upper seal block A81 and the lower seal block A82 approach to each other, the film sheet f is sandwiched between the both seal blocks A81, A82, and the end-part seal Ts is formed on the film sheet f by heat generation of the heat generating portions A81b, A82b of the both seal blocks A81, A82.

Together with the formation of the end-part seal Ts by the heat generating portions A81b, A82b, the end-part seal Ts is sandwiched by the cutting blade 81a and the blade receiving portion 81b, and the end-part seal Ts is cut, and the film sheet f is cut into front and rear so that the packaged body 100 is formed (Figs.2a, 2b and Fig.8).

In this example, when the upper mounting member A811 is lowered while the lower mounting member A821 is raised at the same time, before the upper mounting member A811 reaches the lowest position (lowest point) of a movable range and the lower mounting member A821 reaches the highest position (highest point) of an operating range, respectively, the upper seal block A81 comes into contact with the lower seal block A82, and a state is started that the both seal blocks A81, A82 push and interfere with each other by biasing of the suspension A813 having a spring.

Assuming that such a state where the positions in the front-rear direction of the both seal blocks A81, A82 are different and interfere with each other does not occur and that the upper seal block A81 overlaps the lower seal block A82 on a front view, it is preferable that the lowest position of the upper mounting member A811 and the highest position in the operable range of the lower mounting member A821 be selected and set so that a width of the overlap of the both seal blocks A81, A82 is within a range of approximately 1 to 3 mm. However, the (overlap) width can be changed to other values as long as sealing can be performed appropriately.

Particularly in this example, by assuming that the sub-motor A841 is a motor capable of forward rotation and reverse rotation and that the rotation range of the rotary shaft A842 of the sub-motor A841 is selected from those slightly smaller than 180 degrees in a prior operation of data in the storage portion by the operator described above, if the rotary shaft A842 can rotate 180 degrees (one rotation), before the both mounting members A811, A812 reach each of the bottom dead center of the upper mounting member A811 and the top dead center of the lower mounting member A8, the upper seal block A81 starts to contact with and push against the lower seal block with each other, and the both seal blocks A81, A82 can sandwich the film sheet f with an appropriate pressure to form the end-part seal Ts before the reaching.
when each of the bottom dead center of the upper mounting member A811 and the top dead center of the lower mounting member A8 is set to which the upper mounting member A811 is the lowest position (lowest point) of the movable range and the lower mounting member A821 is the highest position (highest point) of the operating range, it becomes difficult to change the seal pressure which forms the end-part seal Ts by selecting the rotation angle, and the seal pressure cannot be easily changed anymore.

In this example, an elevation drive portion A81a which supports the cutting blade A81a is provided on the upper mounting member A811 (Fig.7 and Fig.8). An elevation drive portion A811a raises and lowers the cutting blade A81a with respect to the mounting base body A811b and the upper seal block A81.

An insertion portion A811c which vertically penetrates the mounting base body A811b and the upper seal block A81 and accommodates the cutting blade A81a is provided on the mounting base body A811b and the upper seal block A81 (Figs.2a, 2b, Fig.4, Fig.7, and Fig.8).

The elevation drive portion A811a can be configured by a piston rod to which the cutting blade A81a is fixed on a distal end part (lower end part), and a cylinder which accommodates the piston rod and advances and withdraws the piston rod downward by a fluid pressure of a gas, a liquid or the like.

In a state where the both seal blocks A81 and A82 are close to each other, the film sheet f is cut by protruding the cutting blade A81a accommodated in the insertion portion A811c by lowering of the elevation drive portion A811a downward from the lower surface of the upper seal block A81 toward the formed end-part seal Ts and by bringing it into contact with the blade receiving portion A82a. Upon completion of the cutting, the elevation drive portion A811a raises the cutting blade A81a to withdraw the cutting blade A81a into the insertion portion A811c.

The elevation drive portion A811a can be also implemented as the one for mechanically elevating the cutting blade A81a by a motor other than the piston rod and the cylinder.

Due to the displacement of the link member A844 for cutting-back, the pivotally supported position reaches the aforementioned closest position from the main shaft A845, and when the end-part seal Ts and the cutting thereof is completed by the both seal blocks A81 and A82, the servomotor A841 rotates reversely. The pivotally supported position due to the reverse rotation of the servomotor A841 is displaced from the closest state from the main shaft A845 (Fig. 8) to the original farthest position (Fig.7).

With the displacement of the link member A844 for cutting-back, the vertical part A848a is pushed upward by the slide guiding portion A848ac of the first arm A847a, the upper seal block A81 is raised with the upper mounting member A811, and at this time, the guided portion A847aa goes round in the direction opposite to the above by motion of the first arm A847a turned by the reverse rotation of the main shaft A845 and is displaced forward in the front-rear direction in which the slide guiding portion A848ac extends to the slide guiding portion A848ac.

In addition, with the displacement of the link member A844 for cutting-back, the second arm A847b turns and reduces the angle between the second arm A847b and the connecting link member A848ba so that the connecting link member A848ba is push down, and by means of the pushing down of the connecting link member A848ba, the lower protruding piece A821 is pulled downward, whereby the lower seal block A82 is lowered together with the lower mounting member A821 (Figs.6b, 6c, and Fig.7).

As described above, the upper seal block A81 rises and the lower seal block A82 lowers, so that a space between the both seal blocks A81 and A82 becomes an original open state, whereby the product to be packaged B and the film sheet f can be advanced subsequently to the formed packaged body 100.

The servomotor A841 expands and contracts the link member A844 for cutting-back and the arm A846 for cutting-back by repeating the rotation and the reverse rotation. By means of this expansion and contraction, a direction of the arm A846 for cutting-back is changed as described above, and the main shaft A845 is rotated and reversely rotated.

### Detection Portion A9

The detection portion A9 includes the dimension detection sensor A91 and a position detection sensor A92 Figs.1b, 1c, Figs.2a, 2b).

The dimension detection sensor A91 which detects a length L of the product to be packaged B is arranged between the packaging machine main-body A1 and the supply conveyer A1. As the dimension detection sensor A91, tin this example, three pairs of optical sensors (upper optical sensors A91a on the uppermost stage, middle optical sensors A91b on a middle stage, and lower optical sensors A91c on the lowermost stage in order from the top) are arranged vertically so that a substantial size in the height direction of the product to be packaged B can be also detected.

When only detection of the length of the product to be packaged B is enough, the one with only one pair of the optical sensors arranged on left and right or up and down can be employed as the dimension detection sensor A91. Moreover, as the dimension detection sensor A91, mechanical types such as an ultrasonic sensor, a limit switch can be employed in addition to the optical types.

As the optical types, those including a camera capable of image recognition can be employed in addition to the optical sensors.

The position detection sensor A92 is arranged on the upstream in the conveyance direction X from the center seal portion A7 and near the downstream end of the main conveying portion A41. The position detection sensor A92 detects a position of the product to be packaged B in the conveyance direction X.

In this example, the position detection sensor A92 is provided on the operating frame A85 and located above the main conveying portion A41, and the position detection sensor A92 detects arrival of the product to be packaged B having been conveyed immediately below the position detection sensor A92.

By providing the position detection sensor A92 on the operating frame A85, the position detection sensor A92 can move front and rear together with the operating frame A85 while keeping a constant distance between the both seal blocks A81 and A82 in the front-rear direction (conveyance direction X).

Moreover, the distance between the position detection sensor A92 and the both seal blocks A81 and A82 can be set to 0 or close to 0 in the front-rear direction, and regardless of the dimension of the product to be packaged B, a positional deviation of the product to be packaged B can be detected immediately before the sealing operation.

Incidentally, the position detection sensor A92 may be arranged left and right of the main conveying portion A41 in the operating frame A85.

A distance d between each of the products to be packaged B is made constant by controlling conveying speeds of the supply conveyer A2 and the conveying conveyer A4 through control of the control portion A10 based on a length of each of the products to be packaged B detected by the dimension detection sensor A91 (Fig.1b). The position detection sensor A92 detects whether or not the constant distance d is kept from the subsequent product to be packaged B, that is, a positional deviation of the product to be packaged B has occurred on the film sheet f based on arrival time or passage time of the product to be packaged B whose arrival is detected and the length of the product to be packaged B detected by the dimension detection sensor A91. The time can be an elapsed time counted by a timer (of the control portion A10, which will be described later) obtained by the control portion A10 with the arrival at or the passage of the dimension detection sensor A91 as a start point.

The length of each of the products to be packaged B that can be packaged is 1 mm or more, and an upper limit of the length is a dimension which can be transferred by the conveying conveyer A4. Therefore, the upper limit of the length of the product to be packaged B depends on the length (machine dimension) in the conveyance direction X of the conveying conveyer A4 (main conveying portion 41).

Since the length of the film sheet f required for packaging the product to be packaged B is calculated by actual measurement (length measurement) of each of products to be packaged B by the sensor of the detection portion A9, thus, it is required that the upper limit of the length of the product to be packaged B can be measured as a condition.

For example, when the mechanical dimension is 1400 mm, a front-rear dimension (bag length) of a normal product to be packaged B is preferably in the range of 40 mm to 1400 mm, and when the mechanical dimension is 800 mm, the front-rear dimension (bag length) of a normal product to be packaged B is preferably in the range of 40 mm to 800 mm.

Here, the bag length means a width in the front-rear direction of an end-part seal Ts (front-rear width of the top seal To + front-rear width of the tail seal Ta) + a length between front and rear of the end-part seals Ts (margin of the bag).

The margin of the bag varies depending on the dimension and shape of the product to be packaged B, but assuming a normal packaging machine which packages food, it is generally set to 10 mm to 30 mm, and the width in the front-rear direction of the end-part seal TS is substantially 12 to 20 mm in general.

However, a range of each numeral value described above is exemplification, and the numeral value range may be deviated as long as the packaged body 100 is appropriately formed.

Further, an optical sensor can be employed for the position detection sensor A92. As the optical sensor, the one including a light projecting portion which emits light and a light receiving portion which receives light emitted by the light projecting portion and detecting arrival of the product to be packaged B when the light emitted by the light projecting portion is shielded, for example, may be employed. However, since it is not necessary to detect a dimension of the product to be packaged B like the dimension detection sensor A91, the position detection sensor A92 can be implemented with a simple configuration with a pair of only the light projecting portion and the light receiving portion.

### Control Portion A10

The control portion A10 can be configured by a computer (incorporated-type computer) having a calculation portion, a storage portion, an input portion, and an output portion (Fig.9) .

The supply-conveyer drive motor M1, the conveying motor M2, the center drive motor M3 which drives the drive roller A61 and the heating roller A71, the electric motor A831, the servomotor A841, the center heating heater H1, the heat generating portions A81b and A82b, and the elevation drive portion A811a are electrically connected to the output portion.

The dimension detection sensor A91 (A91a, A91b, A91c), the position detection sensor A92, and the servomotor A841 are electrically connected to the input portion.

The electric connection of each portion to the output portion is connection capable of transmission and reception of a signal performed through a signal line or wirelessly, and the same applies to the electric connection of each portion to the input portion.

The control portion A10 includes a drive control portion which controls at least the servomotor A841 (not shown).

The storage portion can accommodate data which sets the rotation angle range.

The drive control portion controls the rotation angle range of the servomotor A841 based on the data accommodated in the storage portion.

The storage portion stores, with respect to the rotation angle range of the rotary shaft A842 of the rotary moving servomotor A841, a plurality of angles in the range or angle data of an upper limit angle and a lower limit angle which regulates the range such that the worker selects the rotation angle in advance from the angle range through an operation portion (not shown) and operates the packaging machine, or the angle data is directly stored in the storage portion through the operation portion. The drive control portion refers to the storage portion and rotationally moves the servomotor A841 with rotation angle of the rotary shaft A842 selected or input as above.

Further, the control portion A10 includes a timer which detects elapsed time. In addition, the pinch drive portion A84 can be also implemented as the one having a timer. When the timer of the control portion A10 or the pinch drive portion A84 measures time which the both seal blocks A81 and A82 are close to each other, that is, time during which the heat generating portions A81b and A82b of the both seal blocks A81 and A82 sandwich the film sheet f and detects elapse of predetermined time, regardless of the positions in the front-rear direction of the both seal blocks A81 and A82, that is, regardless of the driving state by the feed drive portion A84, the control portion A10 promptly drives the pinch drive portion A84 (servomotor A841) to open the space between the both seal blocks A81 and S82 thereby being able to open the film sheet f.

### Operation Timing of End-part Seal Portion 6

Operations of the both seal blocks A81 and A82 realized by the feed drive portion A83 and the pinch drive portion A84 having the aforementioned configuration will be mainly described.

The both seal blocks A81 and A82 provided on the operating frame A85 are reciprocated in the conveyance direction X by means of a reciprocating motion in the front-rear direction (conveyance direction X) of the operating frame A85 by the feed drive portion A83 described above (Figs.2a, 2b, Figs.3a, 3b).

More specifically, by means of the control of the control portion A10 which detects arrival of the product to be packaged B by the position detection sensor A92, the feed drive portion S83 rotates the rotation plate A833 by rotating the rotating shaft A832 of the electric motor A831 and causes the operating frame A85 to start movement on the outward path by displacing the link member A834 for feeding operation (Fig.1b and Fig.7).

By means of the control of the control portion A10 which detects the arrival of the product to be packaged B with the position detection sensor A92, the pinch drive portion A84 rotates the rotary shaft A842 of the servomotor A841 as described above so as to rotate the rotary plate A843 by a predetermined angle so that the link member A844 for cutting-back is displaced and rotates the main shaft A845, and by means of the rotation of the main shaft A845, each of the first arm A847a and the second arm A847b rotates integrally with the main shaft A845 and displaces the first connecting portion A848a so as to lower the upper seal block A81, and displaces the second connecting portion A848b so as to raise the lower seal block A82, and in the upper seal block A81 and the lower seal block A82, the film sheet f is sandwiched between the product to be packaged B that has approached to the sub-conveying portion A42 on the main conveying portion A41 and the product to be packaged B that has already transferred to the sub-conveying portion A42 preceding the product to be packaged B (Fig.1c, Fig.2a and Fig.8).

As described above, in a state where the film sheet f is sandwiched between the both seal blocks A81 and A82, the control portion A10 causes formation of the end-part seal Ts by the heat generating portion A81b and cutting of the film sheet f by appearance and disappearance of the cutting blade A81a driven by the elevation drive portion A811a.

After the formation and the cutting of the end-part seal Ts by sandwiching the film sheet f in the both seal blocks A81 and B82, the control portion A10 causes the servomotor A841 to reversely rotate the rotary shaft A842 so as to reversely rotate the rotary plate A843 so that the link member A844 for cutting-back which was displaced as above is returned to the state before the displacement.

With the returning operation of the link member A844 for cutting-back as described above, the main shaft A845 is reversely rotated to return a direction of each of the first arm A847a and the second arm A847b to the original state so that the first connecting portion A848a and the second connecting portion A848b are returned to the state before the displacement, the upper seal block A81 is raised to return to the position before being lowered, and the lower seal block A82 is lowered to return to the position before being raised (Fig.7).

After forming the end-part seal Ts by the at least both seal blocks A81 and A82 and the cutting of the film sheet f, the control portion A10 causes the rotating shaft A832 to rotate by the electric motor A831 as described above so as to further rotate the rotation plate in the same direction, and the control portion A10 displaces the link member A834 for feeding operation toward the original state so that the operating frame A85 is caused to move on the return path.

While the both seal blocks A81 and A82 forms the end-part seal Ts by sandwiching the film sheet f, the feed drive portion A83 moves the both seal blocks A81 and A82 in the conveyance direction X so as to contribute to the conveyance of the film sheet f.

When the movement of the both seal blocks A81 and A82 in the conveyance direction X by the feed drive portion A83 stagnates in the state where the both seal blocks A81 and A82 sandwich the film sheet f, the pinch drive portion A84 is controlled by the control portion A10 to open the both seal blocks A81 and A82 as described above.

### Packaging of Different Size of Products to be packaged B

Hereinafter, a case where a plurality of the products to be packaged B to be packaged are agricultural products which are irregular in size and shape will be described as an example.

After the band-shaped film f pulled out from the film roll F is set in predetermined states on each roller of the bag former A5, the butted portion A6, and the center seal portion A7, a main power of the packaging machine A is turned ON, and a start button on an operation panel of the control portion A10 is pressed (not shown).

Upon acceptance of the operation on the start button, the control portion A10 operates the supply conveyer A2 and the packaging machine main-body A1. That is, the supply-conveyer drive motor M1 of the supply conveyer A2, the dimension detection sensor A91, and the center heating heater H1 are operated (Fig.11a), and the conveying motor M2, the center drive motor M3, the heat generating portions A81b and A82b, the electric motor A831, the servomotor A841, and the elevation drive portion A811a are brought into an operable state.

In the state described above, the operator or another conveyer arranged on the upstream side of the supply conveyer A1 sequentially places the products to be packaged B on the supply conveyer A2. Unlike processed foods or industrial products, the products to be packaged B, which are agricultural products, are usually have different lengths (irregular in size and shape).

In Fig.11a, only the control of the supply-conveyer drive motor M1, the conveying motor M2, the center drive motor M23, and the center heating heater H1 is described, but the operation timing in the conveyance direction X by the electric motor A831 in a normal operation of the packaging machine A1 is synchronized with the conveying motor M2 and thus, it is omitted. Moreover, since the heat generation timing of the heating roller A71 is similar to the center heating heater H1, it is also omitted.

The product to be packaged B is supplied to the packaging machine main-body A1 side by the supply conveyer A2. When the dimension detection sensor A91 detects the supply, the control portion A10 operates the conveying motor M2 and the center drive motor M3.

The first-supplied product to be packaged B is conveyed by the conveying conveyer A4 (main conveying portion A41) in the state placed on the film sheet f toward the center seal portion A7 on the downstream.

When the product to be packaged B is conveyed toward the center seal portion A7, the dimension detection sensor A91 is brought into a non-detection state. When the subsequent product to be packaged B is conveyed from the supply conveyer A2 in the non-detection state, the dimension detection sensor A91 detects the subsequent product to be packaged B again.

When the subsequent product to be packaged B described above is detected, the control portion A10 causes the supply conveyer A2 to stop for a value obtained by subtracting supply distances T1, T2, T3 of the products to be packaged B on the supply conveyer A2 from predetermined time t (time to which can be arbitrarily set, determining an "distance d" described later: 1 second, for example), that is, time t1 (t1 = t - T1), t2 (t2 = t - T2) so as to cause the product to be packaged B to be supplied next to stand by on the supply conveyer A2 or primarily stop the conveying motor M2 and the center drive motor M3 only for time t3 and causes the product to be packaged B to be supplied next to stand by.

By means of the stand-by described above, the distance d between each of the products to be packaged B conveyed through the film sheet f on the conveying conveyer A4 (main conveying portion A41) can be made constant. Further, when the conveying motor M2 and the center drive motor M3 are primarily stopped, the control portion A10 forcedly drives the pinch drive portion A84 (servomotor A841) to promptly open a space between the both seal blocks A81 and A82 and to prevent melting of the film sheet f (a brokenline part in Fig.11a).

Instead that the control portion A10 immediately cause the pinch drive portion A84 to open the space between the both seal blocks A81 and A82 due to the aforementioned stop of the conveying motor M2 and the center drive motor M3, the control portion A10 may only execute control of causing the pinch drive portion A84 to open the space between the both seal blocks A81 and A82 upon detection of elapse of the predetermined time by the aforementioned timer in the proximate state of the both seal blocks A81 and A82.

Together with the opening or instead of the opening of the space between the both seal blocks A81 and A82 at emergency, heat generation by the center heating heater H1 may be temporarily stopped.

When the aforementioned time t1, t2, t3 have elapsed, that is, when the predetermined distance d (see Fig.1) is formed from the previously supplied preceding product to be packaged B, the control portion A10 controls the supply conveyer A2 and/or the conveying conveyer A4 (the supply conveyer drive motor M1 and/or the conveying motor M2) as shown in Fig. 11A so that the next, that is, the subsequent product to be packaged B is supplied to the conveying conveyer A4.

The electric motor A831 of the feed drive portion A83 is also rotated synchronously with the conveying motor M2 and as a result, while the both seal blocks A81 and A82 sandwich the film sheet f, moving speeds of the both seal blocks A81 and A82 in the conveyance direction X are set to the same speed as the conveying speed of the conveying conveyer A4 (main conveying portion A41 and the sub-conveying portion A42). Onto the conveying conveyer A4 (main conveying portion A41) of the packaging machine main-body A1, the products to be packaged B are always fed in sequence with constant distances (Fig.1b).

Further, when the product to be packaged B is supplied to the conveying conveyer A4 (main conveying portion A41) of the packaging machine main-body A1 as described above, and data on a length and a height of the product to be packaged B or, as data related to the length, for example, data on "for how many seconds" the dimension detection sensor A91 (optical sensors A91a to A91c) are operated is detected by the dimension detection sensor A91, the control portion A10 obtains the length L of the product to be packaged B by calculation based on the detected data and the conveying speed of the supply conveyer A2 or the conveying conveyer A4, and obtains an added value Lm by adding an allowance length (excess material length) before and after, which is a constant value, to the length L as data related to the length of the film sheet f required for the packaging.

Furthermore, when any one of three types of "Lo(low)", "Mi (medium)", "Hi (high)" is detected by the upper, medium, lower optical sensors A91a to A91c disposed in three pairs above and below the dimension detection sensor A91 as the data relating to the height, the control portion 10 corrects the added value Lm further by a correction value as below. That is, in the case where the detected height data is the aforementioned "Lo" detected only by the lower optical sensor A91c at a low position, for example, a correction value "0" is added, in the case of the aforementioned "Mi" detected both by the medium and lower optical sensors A91b, A91c at the low position and a medium position, for example, a correction value of "25 mm" is added, or in the case of the aforementioned "Hi" detected also by the upper optical sensor A91a at a high position, for example, a correction value "40 mm" is added to the added value Lm so as to obtain a final value Le of the length of the film sheet f to be supplied.

The control portion A10 stores the final value Le obtained by the aforementioned calculation in the memory (storage portion), and in order to ensure the length of the film sheet f required for packaging the product to be packaged B on the calculation portion of the control portion A10 based on the final value Le, the control portion A10 instantaneously calculates a rotation number (total rotation number)of the pull-out roller A31, a conveying amount of the conveying conveyer A4, rotation numbers (total rotation number)of the drive roller A61 and the heating roller A71 which are rotated by the center drive motor M3, operation patterns of the both seal blocks A81 and A82 (heat generating portions A81b, 82b) by the rotation of the rotating shaft A832 of the electric motor A831 in the end-part seal portion A8 and the rotary shaft A842 of the servomotor A841, that is, an operation speed and timing of each operation of each process (see, each process Pa, Pb, Pc, Pd, Pe in Fig.10a) of an operation trajectory k of the "box motion" by the calculation portion of the control portion A10, and the conveying motor M2, the center drive motor M3, the electric motor A831, and the servomotor A841 are controlled based on the calculation results.

Specifically, in the (lateral pillow-type) packaging machine A of this example, as long as the products to be packaged B are continuously supplied to the supply conveyer A2 at short distances (distance smaller than the aforementioned "d"), in order to maximize processing performance, the control portion A10 continuously operates the conveying motor M2 (the pull-out roller A31 and the conveying conveyer A4) and the center drive motor M3 (the drive roller A61 and the heating roller A71) at constant speeds (a rotation speed and a conveying speed), and regarding each of the supplied products to be packaged B, the control portion A10 obtains the operation patterns and the operation timings of the both seal blocks A81 and A82 by calculation and controls the electric motor A831 of the feed drive portion A83 and the servomotor A841 of the pinch drive portion A84 based on the calculation results.

As described above, the film sheet f on which the product to be packaged B is placed on the conveyed conveyer 7A4 passes through the film guide and is formed the center seal Ss on the both end parts in the left-right width direction of the film sheet f by the drive roller A61 of the butted portion A6 and the heating roller A71 of the center seal portion A7, and the film sheet f forms cylindrical.

Subsequently, the film sheet f is conveyed from the center seal portion A7 to the end-part seal portion A8 on the downstream, and under control of the control portion A10, the front (front-end part) of the product to be packaged B in the cylindrical film sheet f (on which the center seal Ss is formed) is sealed and the end-part seal Ts is provided at the timing that serves as standard for the final value Le of the film length obtained by the aforementioned calculation.

Further, in this example, the film sheet f enclosing the product to be packaged B is sent at a constant speed in the conveyance direction by the conveying conveyer A4, the pair of drive rollers A61 of the butted portion A6, and the pair of heating rollers A71 of the center seal portion A7, even during the formation of the end-part seal Ts, while the seal blocks A81 and A82 move in the conveyance direction X at the same speed as the conveying speed of the film sheet f and the conveying conveyer A41 due to the operation of the "box motion".

Therefore, while moving in the conveyance direction X for a certain period of time, that is, during the operation of the "box motion", the film sheet f is subjected to a heat at a predetermined temperature in the state of being sandwiched between the both seal blocks 2A81 and A82. As described above, the end-part seal Ts is reliably formed on the film sheet f.

Next, when the product to be packaged B is sent by the conveying conveyer A4 and the film sheet f in the conveyance direction for a length corresponding to the final value Le (more precisely, a value shorter than the "corresponding length" by a predetermined length), the "box motion" operation described above is repeated in the end-part seal portion A8, the end-part seal Ts is formed on the rear (rear-end part) of the product to be packaged B in the cylindrical film sheet f enclosing the product to be packaged B and as a result, packaging of the product to be packaged B with the film f is completed.

Note that, as described above, it may be configured that the end-part seal Ts is formed on the front (front-end part) of the next (subsequent) product to be packaged B at the same time as when the end-part seal Ts is formed on the rear (rear-end part) of the product to be packaged B in the cylindrical film sheet f.

Subsequently, the cylindrical film sheet f enclosing the next (subsequent) product to be packaged B is sent to the end-part seal portion A8, and the packaging similar to that for the aforementioned preceding product to be packaged B is performed based on the final value Le stored in the memory related to the subsequent product to be packaged B. That is, the subsequent product to be packaged B is also packaged with the film sheet f with the length corresponding to the length of the subsequent product to be packaged B.

As described above, the products to be packaged B sequentially supplied at the predetermined distances can be packaged with the film sheet f having the length without excess and shortage but corresponding to the length of each of the products to be packaged B.

In this packaging machine A, as shown in Fig.11, the control portion A10 can freely change the operation patterns of the seal blocks A81 and A82 depending on the length L of the product to be packaged B.

For example, if the "length L" is smaller than the predetermined value (operation trajectories of the seal blocks A81 and A82), as shown in Fig.11b, the operation before and after the formation of the end-part seal Ts (process Pc in Fig. 10a) is performed faster than a speed (conveying speed) during the sealing, while when the "length L" is larger than the predetermined value (operation trajectories of the seal blocks A81 and A82) and smaller than a second predetermined value (approximately 1.7 times of the length in the conveyance direction X of the operation trajectories of the seal blocks A81 and A82), as shown in Fig.11c, the operation before and after the formation of the end-part seal Ts (process Pc in Fig.10a) is performed at a speed lower than the speed (conveying speed) during the sealing.

Further, when such control is executed that the seal blocks A81 and A82 are operated at all times, in the case of the product to be packaged B having the length L shorter than the second predetermined value (approximately 1.7 times of the length in the conveyance direction X of the operation trajectories of the seal blocks A81 and A82) which requires a rapid operation, the rapid operation is not affected by an inertia force of the operating part due to the constant operation, whereby the rapid operation can be made.

On the other hand, when the "length L" is larger than the second predetermined value (approximately 1.7 times of the length in the conveyance direction X of the operation trajectories of the seal blocks A81 and A82), it may be so controlled that, as shown in Fig.11d, the operation is performed at a speed lower than the speed (conveying speed) during the sealing before and after the formation of the end-part seal Ts (process Pc in Fig.10a), and the operation is stopped before and after thereof. This is because the inertia force of the operation part hardly affects due to the slow operating speed.

As described above, when the control portion A10 controls the pinch drive portion A84 so as to be operated in accordance with the height (dimension) of the product to be packaged B, not only the operation according to the length of the product to be packaged B but also elevation with an elevation amount according to the height of each of the products to be packaged B can be performed, whereby the packaging machine with higher work efficiency can be realized.

Dealing with Position Displacement of Product to be packaged B

The box motion of the both seal blocks A81 and A82 described above will be explained with a case of packaging of a plurality of products to be packaged B1, B2, and B3 which are irregular in length as an example.

A constant distance d is uniformly kept even between the plurality of products to be packaged B1, B2, and B3 having irregular in length by control of the control portion A10, and the products to be packaged B1, B2, and B3 are conveyed in the conveyance direction X (Fig.10b).

Fig.10b shows a state where the end-part seal Ts is formed by the both seal blocks A81 and A82 between the first product to be packaged B1 and the subsequent product to be packaged B2, and Fig.10c shows a state where the film sheet f is cut into front and rear on the end-part seal Ts, the tail seal Ta is formed on the film sheet f on the rear of the first product to be packaged B1, and the top seal To is formed on the film sheet f on the front of the subsequent product to be packaged B2.

As shown in Fig. 10c, the product to be packaged B3 further subsequent to the subsequent product to be packaged B2 is positionally shifted.

The positional deviation is usually caused by transfer from the supply conveyer A2 to the conveying conveyer A1 (main conveying portion A41) of the packaging machine main-body A1 or inertia in the conveyance direction X caused by the conveyance.

On the other hand, the film sheet f packaging the first product to be packaged B1 is cut off by the operation of the cutting blade A81a (Fig.8) by the elevation drive portion A811a described above and is completed as the packaged body 100 packaging the product to be packaged B1 (Figs.10c and 10d) .

Upon detection of the occurrence of the positional deviation of the product to be packaged B3 in the film sheet f by the position detection sensor A92, the control portion A10 opens the space between the both seal blocks A81, A82 (Fig.7) and passes the displaced product to be packaged B between the both seal blocks A81 and A82 by conveyance of the conveying conveyer A4 (the main conveying portion A41 and the sub-conveying portion A42) so that jamming to the product to be packaged B by the both seal blocks A81 and A82 can be prevented (Fig.10d). Then, when the subsequent product to be packaged B4 in a normal position is detected by the position detection sensor A92, (the electric motor A831 of) the feed drive portion A83 and (the servomotor A841 of) the pinch drive portion A84 are driven again to resume the box motion of the both seal blocks A81 and A82 to achieve prompt recovery.

### Seal Strength

The seal strength is determined by the following factors 1) to 3):
1) Pressure (seal pressure) with which the both seal blocks A81 and A82 sandwich the film sheet f
2) Time in which the both seal blocks A81 and A82 sandwich the film sheet
3) Welding temperature

In the case that opening and closing between the both seal blocks A81 are A82 performed by a single motor as in Patent Document 1, the aforementioned factors 1) and 2) cannot be changed, but the seal strength according to the packaging can be adjusted only by changing the aforementioned factor 3).

In the present invention, since the pinch drive portion A84 having the servomotor A841 as a power source is provided in addition to the electric motor A831 of the feed drive portion A83, the factors 1) and 2) can also be easily changed, and the seal strength can be adjusted more flexibly. Particularly when a fluid pressure such as an air cylinder, for example, other than the servomotor A841 is used as a power source of the pinch drive portion A83, pressure adjustment is conducted by adjusting an air pressure (fluid pressure of the cylinder) and thus, a motion is slow (capability is low) and is not suitable for the packaging of a large quantity of products to be packaged.

In the present invention, particularly the both seal blocks A81 and A82 are enabled to vertically move (elevation) independently of a front-rear movement, so that the both seal blocks A81 and A82 can be set to be separated from each other when the both seal blocks A81 and A82 are in contact for a certain period of time.

Further, in the present invention, since vertical movement (elevation) can be performed independently of the front-rear movement of the both seal blocks A81 and A82 (by disposing the position detection sensor A92 immediately before the both seal blocks A81, A82 in the conveyance direction), even when a positional deviation of the product to be packaged B is detected in the film sheet f immediately before the both seal blocks A81 and A82, the vertical movement of the seal blocks A81 and A82 can be immediately stopped.

### Example of Variation

In the aforementioned embodiment, it is so configured that each of the first constituting portion and the second constituting portion operates to approach to and separate from each other to open and close the space between the first constituting portion and the second constituting portion, that is, each of the upper seal block A81 and the lower seal block A82 elevates up and down to open and close the space between the upper seal block A81 and the lower seal block A82. Other than the above, only one of the first constituting portion and the second constituting portion is operated to approach to and separate from the other one of the first constituting portion and the second constituting portion so that a space between the first constituting portion and the second constituting portion may be opened and closed, that is, only one of the upper seal block A81 and the lower seal block A82 moves up and down to approach to and separate from the other of the upper seal block A81 and the lower seal block A82 so that a space between the upper seal block A81 and the lower seal block A82 may be opened and closed.

Specifically, it can be implemented such that the lower seal block A82 is fixed in a gap between the main conveying portion A41 and the sub-conveying portion A42 with respect to the operating frame A85, and by elevating only the upper seal block A81, the film sheet f is sandwiched between the upper seal block A81 and the lower seal block A82.

In addition, regarding the first connecting portion A848a and the second connecting portion A848b, a configuration other than the above can be employed that each of the both seal blocks A81 and A82 (upper mounting member A811, lower mounting member A821) and each of the first and second arms A847a and A847b are connected by using a further separate link member.

As long as smooth operations of the both seal blocks A81 and A82 can be ensured, the first connecting portion A848a may be directly supported on the upper seal block A81 (upper mounting member A811), and the second connecting portion A848b may be directly supported on the lower seal block A82 (lower mounting member A821).

Furthermore in the aforementioned embodiment, the both seal blocks A81 and A82 include the heat generating portions A81b and A82b. In addition, only the upper seal block A81 may include the heat generating portion or to the contrary, only the lower seal block A82 may include the heat generating portion.

To the contrary to the provision of the cutting blade A81a on the upper seal block A81 and of the blade receiving portion A82a on the lower seal block A82 as described above, provision of the cutting blade A81a on the lower seal block A82 and the blade receiving portion A82a on the upper seal block A81 may be implemented.

Further, regarding the cutting of the film sheet f, instead of using the cutting blade A81a and the blade receiving portion A82a, a sub heat-generating portion (not shown) which generates a heat at a temperature higher than that in the end-part seal formation may be provided, separately from the heat generating portion A81b, on both or either one of the upper seal block A81 and the lower seal block A82 instead of the cutting blade A81a and the blade receiving portion A82a, and welding is performed.

In the shown example, the main motor A831 is a motor which rotates the rotating shaft A832 (rotation plate A833) but does not reversely rotate the rotating shaft A832 (rotation plate A833), but a motor which rotates and reversely rotates the rotating shaft A832 (rotation plate A833) can be employed as the main motor A831, similarly to the sub-motor A841. That is, it may be so constituted that both the movement on the outward path of the operating frame A85 (both seal blocks A81 and A82) by forward rotation of the main motor A831 and the movement on the return path of the operating frame A85 (both seal blocks A81 and A82) by the reverse rotation of the main motor A831 are performed. In the above, as the main motor A831, a known motor capable of forward rotation and reverse rotation such as a servomotor, a stepping motor, a linear motor or the like may be employed and implemented similarly to the sub-motor A841.

In the aforementioned embodiment, the rotation plate A833 is provided on the rotating shaft A832 of the main motor A831, and power is directly supplied from the main motor A831 to the rotation plate A833, but other than that, a driving force of the main motor A831 may be indirectly transmitted to the rotation plate A833 through a transmission member such as gears including a pulley and a belt. Moreover, in the sub-motor A841, too, the rotary plate A843 is provided on the rotary shaft A842, and power is supplied directly from the sub-motor A841 to the rotary plate A843, but other than the above, the driving force of the sub-motor A841 may be indirectly transmitted to the rotary plate A843 through a transmission member such as gears including the pulley and the belt.

When the linear motor is employed for the main motor A831 or the sub-motor A841, the rotating shaft A832 or the rotary shaft A842 does not exist but the main motor A831 and the sub-motor A841 rotate the rotation plate A833 and the rotary plate A843 by electromagnetic induction. The aforementioned linear motor is called "linear" (straightline) motor from an impression that a direction in which the power is exerted is linear, but the present invention can rotate or rotationally move (rotation and reverse rotation) the rotation plate A833 and the rotary plate A843 by the electromagnetic induction by forming the guide annularly so as to make a direction in which the power of the motor is exerted circular (arcuate).

However, the linear motor is, as its name suggests, extended linearly up and down along the vertical guide A86 and may be elevated the both seal blocks A81 and A82 without using a mechanical member such as the first and second connecting portions A848a and A848b and the like. When the linear motor is made linear as above, data (interval data)regarding a distance between the both mounting members A811 and A821 when the both mounting members A811 and A821 approach to each other the most is stored in the storage portion, based on the data accommodated in the storage portion, the drive control portion can adjust the pressure by changing the distance between the both mounting members A811 and A821 when the both mounting members A811 and A821 approach to each other the most. Specifically, it may be so configured that the storage portion include a first storage portion and a second storage portion (not shown), a plurality of the interval data to be candidates are stored in the first storage portion, and the data selected from the plurality of the interval data in the first storage portion via an operation portion of the packaging machine by the operator is stored (accommodated) in the second storage portion, and the control portion A10 is made to refer to the second storage portion. It may also be configured such that data which regulates an upper limit and a lower limit of the interval data is set in the first storage portion, and the distance data required by the operator may be stored (input) in the second storage portion by the operation portion from a series of the continuous interval data between the upper limit and lower limit.

When the rotating and driving servomotor, a stepping motor or a linear motor with the annular guide is employed for the sub-motor, it may be so configured that a plurality of rotation angle data to be candidates are stored or data of an upper limit and a lower limit is set for the angle data which could be selected in the first storage portion, and the angle data selected from the data in the first storage portion is stored (input) in the second storage portion, and the control portion A10 is made to refer to the second storage portion.

In initial setting of the packaging machine, first, a length of the packaged body to be formed, the number of packaging cycles (packaging speed), and a material, a thickness and a tension of the film sheet f are specified and then, a sealing time, a sealing pressure, a sealing (welding) temperature, which are factors for setting seal strength, are determined according to specified thickness, material and tension of the film sheet f and are set in the storage portion.

In general, there are various types of the film sheet f used for packaging even for a single user of the packaging machine, and it is required that the packaging machine can deal with a change in the thickness or material of the film sheet f in accordance with needs of the user. That is because, when the thickness or material of the film sheet f is changed, the appropriate seal strength is also changed. The present invention can adjust the seal pressure and enables a change of the seal strength.

In order to deal with the change in the thickness of the film sheet f by the adjustment of the seal pressure so that an appropriate seal pressure can be selected within a range of the change in the thickness (between the upper limit and the lower limit of the thickness) can be selected by the user, that is, so that the appropriate distance (minimum distance) between the both mounting members A811 and 821 when they approach to each other the most can be selected, it is necessary to determine a reference point for selecting the minimum distance (pressure-adjustment reference point) from a maximum value and a minimum value of the thickness with respect to the positions of the both mounting members A811 and A821. Since the suspension A831 is not usually changed, a spring constant is assumed to be constant.

For convenience of explanation, in a state where the film sheet f is not sandwiched, the positions of the both mounting members A811 and A821 when the both seal blocks A81 and A82 are in contact with each other and the suspension A831 is not compressed are called default positions of the both mounting members A811 and A821, while contact positions between the both seal blocks A81 and A82 that do not sandwich (the film sheet f) when the both mounting members A811 and A821 are at the default positions are called non-pressurized positions. In a state where the both mounting members A811 and A821 remain at the default positions, when the film sheet f is sandwiched between the both seal blocks A81 and A82, the upper seal block A81 changes the position upward from the non-pressurized position, the suspension A831 is compressed, and the space between the both seal blocks A81 and A82 is brought into a pressurized state.

The pressure-adjustment reference point related to the positions of the both mounting members A811 and A821 are determined in advance based on the thickness of each of the film sheet f with the maximum thickness and the film sheet f with the minimum thickness to be used. The pressure-adjustment reference point is a reference point for adjustment in a direction in which the seal pressure is increased within a range between the lower limit (minimum) and the upper limit (maximum) of the thicknesses of the film sheet f. An amount by which the minimum distance between the both mounting members A811 and A821 is narrowed can be selected from the pressure-adjustment reference point. Specifically, the positions of the both mounting members A811 and A821 whose minimum distance is narrower than the pressure reference point and which is the closest to the pressure reference point that could be selected are set to the positions having the weakest seal pressure, while a position corresponding to the thickness of the film sheet f having the maximum thickness that requires the strongest seal pressure is set to be a position having the strongest seal pressure that could be selected (the minimum distance) and thus, in order that one or a plurality of types of intermediate seal pressures can be further obtained between the minimum seal pressure and the maximum seal pressure, each data is stored in the storage portion (first storage portion) such that the positions of the both mounting members A811 and A821 (the minimum distance) corresponding to each of the intermediate seal pressures can be selected. By enabling adjustment so that the minimum distance is narrowed stepwise from the pressure reference point based on the pressure-adjustment reference, the seal pressure can be increased stepwise.

When the user determines (the thickness of) the film sheet f to be actually used, the appropriate minimum interval data is selected from the storage portion (first storage portion) by a selection operation of the required seal pressure in the operation portion. The control portion A10 stores the data of the selected minimum interval in the storage portion (second storage portion) and refers thereto. The selection of the seal pressure by the user through the operation portion may be performed independently of the other parameters, but in this example, it can be set with the other parameters such as a sealing temperature, a sealing time by selection of the film sheet f. When a linear-type of the linear motor is used as the sub-motor, it is necessary only to directly control a stroke of the linear motor with each of the data on the minimum interval as described above. On the other hand, when the sub-motor crank-drives the both mounting members A811 and A821 as shown by a rotation drive source (a motor capable of positioning control such as the rotation-type servomotor as shown, a stepping motor), since moving distances of the both mounting members A811 and A821 with respect to the rotation amounts are mechanically determined from a crank stoke and a crank angle, the strokes of the both mounting members A811 and A821 may be indirectly controlled using the rotation amount as mediation values.

That is, by selection of the seal pressure due to the operation portion, the rotation angle of the rotary shaft according to the stroke amounts of the both mounting members A811 and A821 corresponding to the seal pressure is calculated by the calculation portion, thereby storing in the storage portion (second storage portion), and the rotation angle is given to the sub-motor by the control portion A10 referring to the storage portion.

Under the control of the sub-motor, which is the rotation drive source, when the both seal blocks A81 and A82 are at the most separated positions is set to 0 degrees, at the time of being approached the both seal blocks A81 and A82 to each other, the both seal blocks A81 and A82 are brought into a state of sandwiching the film sheet f therebetween and pressing each other by biasing of the suspension A831 before the rotary shaft of the sub-motor rotates by half, that is, forward rotation by 180 degrees, and the sealing pressure can be adjusted by selecting the angle range of the rotary shaft from the angle range not larger than the 180 degrees and by changing the range (stroke) of the linear motions of the both mounting members A811 and A821.

As described above, when the sub-motor is used as the rotation drive source, the sealing pressure for forming the end-part seal on the film sheet f can be easily adjusted by selecting the angle ranges of the forward rotation and reverse rotation of the rotation drive source in the pinch drive portion.
upon adjusting the seal strength, the sealing temperature can be changed even in the existing packaging machine, but practical adjustment of the sealing pressure and the sealing time can be realized for the first time by the present invention.

In the aforementioned embodiment, the packaging machine which packages the plurality of products to be packaged B having different in size or shape is exemplified, but other than the above, the present invention can be implemented in a packaging machine which packages a plurality of products to be packaged B having uniform in size and shape.

Further, the present invention is not limited to implementation with the packaging machine which performs well-known packaging other than the pillow packaging. When performing the present application invention for the packaging other than the aforementioned lateral pillowpackaging, the seal blocks, that is, the first constituting portion and the second constituting portion are not limited to those arranged on up and down but can be also performed as one that are arranged on left and right of the conveying conveyer A4 and opens and closes. Furthermore, when forming the packaged body 100 as a stand-pack, the center seal may not be formed but an upper part may be open, and in this case, the center seal portion A7 is not necessary.

Further, the drive roller A61 and the heating roller A71 may be driven not by the center drive motor M3 but from the conveying motor M2 through a transmission mechanism such as a belt and a pulley, a chain and a sprocket, or a combination of a plurality of gears.

The main conveying portion A41 of the supply conveyer A4 may arrange a pair of side belts in the same conveyance directions and having belt surfaces directed in the up-down direction orthogonal to the conveying surface stood on the left and right of the first belt A413 which conveys the product to be packaged B on the conveying surface (upper surface) so as to face each other (not shown).

### Overview

The present invention provides a packaging machine A in which, when the film sheet f wrapping the product to be packaged B passes between the upper and lower seal blocks A81 and A82, the pinch drive portion forms the end-part seal on the film sheet f by closing a space between the both seal blocks A81 and A82 and sandwiching the film sheet f, and during the formation of the end-part seal, the feed drive portion contributes to the conveyance of the film sheet f by moving the both seal blocks A81 and A82 in the front-rear direction, and when the movement of the both seal blocks A81 and A82 by the feed drive portion stagnates in the state where the film sheet f is sandwiched, the pinch drive portion automatically opens the both seal blocks A81 and A82, and then, opening and closing of seal blocks are performed by control of the angle between the forward rotation and reverse rotation of the servomotor, whereby the seal pressure can be easily changed.

Here, points of the sealing operation of the seal blocks A81 and A82 will be described.

In a stage when the seal blocks A81 and A82 reach predetermined positions in the front-rear direction (particularly the positions immediately after the operating frame A83 is switched from the movement toward the rear to the movement toward the front, that is, the positions slightly moved from the rearmost position in the movable range in the front-rear direction to the front), a command to start the seal blocks A81 and A82 (command to start the approaching operation) is emitted from the control portion A10 to the servomotor A841, and the both seal blocks A81 and A82 continuously perform the following operations 1) to 5).
1) When the seal blocks A81 and A82 are at the predetermined positions described above in the front-rear direction, the start instruction emitted by the control portion A10 is received by (the servomotor A841 of) the pinch drive portion.
2) The pinch drive portion moves the both seal blocks A81 and A82 to an engaged position (position where the film sheet f is sandwiched) in the directions of approaching and separating (the servomotor A841 rotates forward).
3) When the both seal blocks A81 and A82 come to the engaged position, the control portion A10 activates the timer, and the timer starts counting of elapsed time.
4) When the timer counts the elapse of predetermined time, the control portion A10 emits a command of the opening (separating) operations of the both seal blocks A81 and A82 to (the servomotor A841 of) the pinch drive portion.
5) The pinch drive portion moves the both seal blocks A81 and A82 to the open positions (the maximum separation position) (the servomotor A841 is reversely rotated).

In particular, by performing the series of operations 1) to 5) described above, even when the positions immediately after the start instruction in the front-rear direction become the stand-by positions of the front-rear operations of the both seal blocks A81 and A82, at the timing when the start instruction is emitted, since the operations to the front of the both seal blocks A81 and A82 are in a state having transferred to the operation synchronized with the film sheet f and thus, even when the both seal blocks A81 and A82 perform the series of operations (one-cycle operation), they are located at predetermined (scheduled) positions for sealing and cutting with respect to the film sheet f. Therefore, when time of the stand-by state (stand-by time) is measured (counted) by the timer, and the elapse of the predetermined time is counted, there is no need to employ an avoidance operation (opening of the both seal blocks A81 and A82). However, it is not excluded that the avoidance operation is performed by counting the stand-by time with the timer and detecting the elapse of the predetermined time.

Particularly in this packaging machine A, the packaging with the appropriate length can be performed for all in accordance with the dimensions of each of the sequentially conveyed products to be packaged B, and it is not necessary for the operator to stop the device for resetting the machine each time when each product to be packaged having a different length is to be packaged, further, the film sheet f is not wasted, and the packaging can be promptly performed.

In the present invention, in contacting and separating the both seal blocks A81 and A82 in the up-down direction, the one that performs the box motion, which is excellent in packaging the product to be packaged B having a high height and whose movement trajectory k is shown in FIG. 11a, is employed as the end-part seal portion A8.

Particularly in the present invention, since the vertical movement (opening and closing) of the seal-blocks A81 and A82 can be performed independently of the front-rear movement, thus it can be easily performed such that when the upper and lower blocks are in contact with each other for a certain period of time, the upper and lower blocks are separated.

Further, in the present invention, since the vertical movement of the seal blocks A81 and A82 can be performed independently of the front-rear movement, the vertical movement of the seal blocks can be stopped even upon detection immediately before the seal block.

The present invention can be used in various industrial fields such as packaging of electronic components and components of precision machines other than packaging of processed foods and other foods, agricultural products, livestock products such as meat, and pharmaceuticals.

### Reference Signs List

- A: Packaging machine
- A1: Packaging machine main-body
- A2: Supply conveyer
- A3: Sheet supply portion
- A4: Conveying conveyer
- A5: Bag former
- A6: Butted portion
- A7: Center seal portion
- A8: End-part seal portion
- A9: Detection portion
- A10: Control portion
- A31: Pull-out roller
- A40: Guide rail
- A41: Main conveying portion
- A42: Sub-conveying portion
- A43: First protruding portion
- A44: Second protruding portion
- A45: First guide rod
- A46: Second guide rod
- A51: Standing plate
- A52: Cutting-back plate
- A61: Drive roller
- A71: Heating roller
- A80: Guided portion
- A81: Upper seal block (first constituting portion)
- A81a: Cutting blade
- A81b: Heat generating portion
- A82: Lower seal block (second constituting portion)
- A82a: Blade receiving portion
- A82b: Heat generating portion
- A83: Feed drive portion
- A84: Pinch drive portion
- A85: Operating frame
- A86: Vertical guide
- A91: Dimension detection sensor
- A92: Position detection sensor
- A411: First tail pulley
- A412: First head pulley
- A413: First belt
- A414: First length-adjusting pulley
- A421: Second tail pulley
- A422: Second head pulley
- A423: Second belt
- A424: Second length-adjusting pulley
- A801: Frist receiving portion
- A802: Second receiving portion
- A811: Upper mounting member (first mounting member)
- A811a: Elevation drive portion
- A811b: Mounting base-body
- A811c: Insertion portion
- A812: Through hole
- A813: Suspension (snapping member)
- A821: Lower mounting member (first mounting member)
- A822: Through hole
- A830: Feed guide
- A830a: Fixed portion
- A831: Electric motor
- A832: Rotating shaft
- A833: Rotation plate
- A834: Link member for feeding operation
- A841: Servomotor
- A842: Rotary shaft
- A843: Rotary plate
- A844: Link member for cutting-back
- A845: Main shaft
- A845a: Bearing
- A846: Arm for cutting-back
- A847a: First arm
- A847aa: Guided portion
- A847b: Second arm
- A848a: First connecting portion
- A848aa: Vertical part
- A848ab: Lateral part
- A848ac: Slide guiding portion
- A848b: Second connecting portion
- A848ba: Connecting link member
- A848bb: Lower protruding piece
- A851: Top part
- A852: Bottom part
- A853: (left and right) Side parts
- A854: Guide receiving portion
- B: Product to be packaged
- B1 to B6: Products to be packaged
- F: Film roll
- f: Film sheet
- M1: Supply-conveyer drive motor
- M2: Conveying motor
- M3: Center drive motor
- Ss: Center seal
- Ts: End-part seal
- To: Top seal
- Ta: Tail seal
- X: Conveyance direction

## Claims

1. A packaging machine comprising a supply conveyer which supplies a product to be packaged, a sheet-supply portion which supplies a band-shaped film sheet for packaging, a bag former, and an end-part seal portion, wherein
a longitudinal direction of the band-shaped film sheet is served as a front-rear direction, a plurality of the products to be packaged supplied from the supply conveyer are placed on the band-shaped film sheet supplied from the sheet-supply portion, whereby the film sheet is conveyed along the front-rear direction;
the bag former sequentially curves the film sheet in a width direction orthogonal to the longitudinal direction;
after or before the curving, the supply conveyer sequentially places each of the products to be packaged onto the film sheet while taking a distance between the preceding product to be packaged and the subsequent product to be packaged, and the product to be packaged is wrapped with the curved film sheet;
the end-part seal portion sequentially forms an end-part seal which seals at least either one of a front and a rear of each of the products to be packaged to the film sheet which wraps the product to be packaged;
the end-part seal portion includes at least two constituting portions, a first constituting portion arranged near the conveyed film sheet after being curved and a second constituting portion arranged on an opposite side to the first constituting portion with the curved film sheet sandwiched therebetween, and the end-part seal portion includes a pinch drive portion and a feed drive portion; and
the pinch drive portion includes a motor capable of rotating a rotary shaft forward or backward within an arbitrary angle range;
the pinch drive portion convert the forward rotation of the rotary shaft of the motor into a linear motion and transmit to at least any one of the constituting portions, whereby the one constituting portion can approach to the other constituting portion, and the one constituting portion can separate from the other constituting portion by reverse rotation of the rotary shaft of the motor;
at least either one of the both constituting portions is biased to the approaching direction by an elastically deformable snapping member;
when the film sheet which wraps the product to be packaged passes through between the two constituting portions, the pinch drive portion closes a space between the both constituting portions by approaching at least one of the two constituting portions to the other one of constituting portion to sandwich the film sheet thereby forming the end-part seal on the both constituting portions;
while the both constituting portions sandwich the film sheet, the feed drive portion moves at least the constituting portion which performs the approaching operation of the both constituting portions in the front-rear direction;
when at least one of the both constituting portions approaches to the other, the one and the other one of the both constituting portions pushes each other by an elastic force of the snapping member so that a pressure for forming the end-part seal to the sandwiched film sheet is given, and
when at least one of the both constituting portions approaches to the other upon the position which the both constituting portions is the most separated positions from each other is set to as 0 degrees, before the rotary shaft rotates by half, that is, rotates forward by 180 degrees, the one and the other one of the both constituting portions are brought into a state of pushing each other by the elastic force of the snapping member, and by selecting an angle range of the rotary shaft from the angle ranges at 180 degrees or less and by changing the range of the linear motion, the pressure can be adjusted.

2. The packaging machine according to claim 1, further comprising a control portion, wherein
the control portion includes a storage portion which stores data for setting the range of the rotation angle and a drive control portion which controls the motor, and
the motor is a servomotor or a stepping motor, and the drive control portion controls the range of the rotation angle of the motor based on the data stored in the storage portion.

3. A packaging machine comprising a supply conveyer which supplies a product to be packaged, a sheet-supply portion which supplies a band-shaped film sheet for packaging, a bag former, and an end-part seal portion, wherein
a longitudinal direction of the band-shaped film sheet is served as a front-rear direction, a plurality of the products to be packaged supplied from the supply conveyer are placed on the band-shaped film sheet supplied from the sheet-supply portion, and the film sheet is conveyed along the front-rear direction;
the bag former sequentially curves the film sheet in a width direction orthogonal to the longitudinal direction;
after or before the curving, the supply conveyer sequentially places each of the products to be packaged onto the film sheet while taking a distance between the preceding product to be packaged and the subsequent product to be packaged, and the product to be packaged is wrapped with the curved film sheet;
the end-part seal portion sequentially forms an end-part seal which seals at least either one of a front and a rear of each of the products to be packaged to the film sheet, which wraps the product to be packaged;
the end-part seal portion includes at least two constituting portions, a first constituting portion arranged near the film sheet being conveyed after being curved and a second constituting portion arranged on an opposite side to the first constituting portion with the curved film sheet sandwiched therebetween, and the end-part seal portion includes a pinch drive portion and a feed drive portion;
when the film sheet which wraps the product to be packaged passes through between the two constituting portions, the pinch drive portion closes a space between the both constituting portions to sandwich the film sheet by bringing at least one of the two constituting portions to approach to the other constituting portion, whereby the end-part seal is formed on the both constituting portions;
while the both constituting portions sandwich the film sheet, the feed drive portion moves at least the constituting portion which performs the approaching operation of the both constituting portions in the front-rear direction;
the pinch drive portion includes a first mounting member on which the first constituting portion is mounted so as to face the second constituting portion and a second mounting member on which the second constituting portion is mounted so as to face the first constituting portion;
the pinch drive portion causes the both constituting portions to approach to each other by bringing at least one mounting member of the both mounting members closer to the other mounting member and to separate the both constituting portions away from each other by separating the one mounting member from the other mounting member;
either one of the both constituting portions is mounted on one of the mounting members via an elastically deformable snapping member, and at least either one of the both constituting portions is biased to the approaching direction by the snapping member;
when at least one of the both constituting portions approaches to the other, the one and the other one of the both constituting portions push each other by an elastic force of the snapping member to give a pressure for forming the end-part seal on the sandwiched film sheet;
when the one mounting member of the both mounting members approaches to the other mounting member from a position where the both mounting members are the most separated from each other, before the both mounting members come the closest to each other, the one and the other one of the both constituting portions are brought into a state of pushing each other by the elastic force of the snapping members, and
the pressure can be adjusted by changing the distance between the both mounting members when the both mounting members come the closest to each other.

4. The packaging machine according to claim 2, wherein
the drive control portion has substantially the whole section for movement from a rearmost position to a frontmost position in the front-rear direction in a movement trajectory of each of the both constituting portions as a linear movement section in which the both constituting portions move forward with the film sheet therebetween.

5. The packaging machine according to claim 2, wherein
the drive control portion causes the pinch drive portion to perform the approaching operation between the both constituting portions while being located at the rearmost position in the front-rear movement of the constituting portion by the feed drive portion or while moving from the rearmost position to slightly front, and the drive control portion causes the pinch drive portion to perform the separating operation of the both constituting portions while being located at the frontmost position in the front-rear movement of the constituting portion by the feed drive portion or while moving from the frontmost position to slightly front, so that when viewed from a direction orthogonal to each of the direction of approaching and separating of the both constituting portions and the front-rear moving direction of the both constituting portions, each of the constituting portions presents a substantially rectangular movement trajectory.

6. The packaging machine according to claim 2, further comprising:
a detection portion, wherein
the feed drive portion includes a main motor which moves the both constituting portions along the conveyance direction of the film sheet with the motor of the pinch drive portion as a sub-motor;
the detection portion includes one or a plurality of sensors, and the detection portion can detect a position of the product to be packaged in the at least front-rear direction, and
the control portion can automatically control an operation of the end-part seal portion by the pinch drive portion at least by a position of the product to be packaged which is detected by the detection portion.

7. The packaging machine according to claim 2, wherein
the control portion includes a timer which can detect closing time while the both constituting portions are closed by driving of the pinch drive portion or can detect stagnation time when movement of the constituting portion by the feed drive portion stagnates, and when the timer detects that the closing time or the stagnation time reaches a preset time, the control portion forcedly opens a space between the both constituting portions by driving the pinch drive portion.

8. The packaging machine according to claim 6, further comprising:
a center-seal portion is provided on a downstream side of the bag former in a conveyance direction of the film sheet, wherein
the width direction is set as a horizontal direction, the center-seal portion forms a center seal extending in a longitudinal direction of the film sheet on the film sheet by overlapping and sealing both left and right end sides of the film sheet directed upward due to the curving above the product to be packaged,
at least a part of the sensors constituting the detection portion is a dimension detection sensor provided on the upstream of the center-seal portion and capable of detecting a length and a height of the product to be packaged, and
on the basis of the length in the front-rear direction of the individual product to be packaged calculated based on the data detected by the dimension detection sensor, the control portion calculates at least an operation pattern and operation timing of the constituting portion which performs approaching operation and the length of the film sheet required for packaging, and based on the calculated operation pattern, operation timing, and the required length of the film sheet, the control of the drive of the pinch drive portion and the feed drive portion of the end-part seal portion is performed.

9. The packaging machine according to claim 8, wherein
the first constituting portion is arranged on above the film sheet conveyed with the center seal formed, and the second constituting portion is arranged on below the film sheet conveyed with the center seal formed;
when the film sheet passes through between the both constituting portions, the pinch drive portion lowers the first constituting portion and raises the second constituting portion to sandwich the film sheet between the both constituting portions;
at least one constituting portion of the both constituting portions includes a heat generating portion which performs heat-seal;
one of the both constituting portions includes a cutting blade that appears and disappears from the constituting portion, and the other one of the both constituting portions includes a blade receiving portion which receives the cutting blade, and
by sandwiching the film sheet between the both constituting portions, the end-part seal is formed on the film sheet by the heat generating portion, and the film sheet is cut into front and rear by the cutting blade and the blade receiving portion.

10. The packaging machine according to claim 8, further comprising:
a conveying conveyer which is arranged on the downstream side of the supply conveyer and performs the conveyance of the film sheet on which the product to be packaged is placed and an operating frame movable front and rear along the conveyance direction of the film sheet by the feed drive portion, wherein
the conveying conveyer includes a main conveying portion and a sub-conveying portion arranged on the downstream side of the main conveying portion in the conveyance direction;
the operating frame includes a pair of left and right vertical guides arranged on left and right of the conveying conveyer and extending vertically, and a pair of upper and lower seal blocks which is extended over the both vertical guides and is guided by the both vertical guides so as to be movable up and down by the pinch drive portion;
of the seal blocks, the upper seal block is the first constituting portion and the lower seal block is the second constituting portion;
the both seal blocks are operated vertically between the main conveying portion and the sub-conveying portion to open and close;
in a state where at least a space between the both seal blocks is open, the upper seal block is located above a conveying surface of the conveying conveyer, while the lower seal block is located below the conveying surface;
one of the surfaces of the pair of seal blocks facing each other is provided with the cutting blade extending to left and right and the heat generating portion extending to left and right is provided on each of the front and rear of the cutting blade as a border, and
the other one of the surfaces of the both seal blocks facing each other is provided with the blade receiving portion extending to left and right and the heat generating portion extending to left and right is provided on each of the front and rear of the blade receiving portion as a border, and
the film sheet is sandwiched between the both seal blocks, and the end-part seal is formed on the film sheet by each of the heat generating portions, and the film sheet is cut into front and rear by the cutting blade and the blade receiving portion on the end-part seal.

11. The packaging machine according to claim 9, wherein
the feed drive portion includes a feed guide which is fixed directly or indirectly to the conveying conveyer and extending in the front-rear direction, the main motor which is fixed directly or indirectly to the conveying conveyer, a rotation plate rotated by the main motor, and a link member for feeding operation;
a center line of rotation of the rotation plate extends in the horizontal direction;
one end part of the link member for feeding operation is pivotally supported by the operating frame;
the other end part of the link member for feeding operation is pivotally supported by the rotation plate at a position apart from the center of rotation of the rotation plate, whereby the link member for feeding operation links the operating frame with the rotation plate;
the feed drive portion can reciprocate the operating frame along the feed guide by rotation of the rotation plate by the main motor with a direction opposite to the conveyance direction as an outward path and the same direction as the conveyance direction as a return path;
the pinch drive portion includes the sub-motor provided on the operating frame, a rotary plate which rotates forward and backward by the sub-motor, a link member for cutting-back with one end supported by the rotary plate at a position away from the center of rotation of the rotary plate, a main shaft extending in the horizontal direction and supported by the operating frame, an arm for cutting-back which is provided on the main shaft and extending in a direction intersecting the main shaft, and having a distal end part supported on the other end of the link member for cutting-back, a first arm provided on the main shaft at a position different from that of the arm for cutting-back in the horizontal direction and extending in the direction intersecting the main shaft, and a second arm provided on the main shaft and extending in the direction intersecting the main shaft and in a different direction from that of the first arm;
a distal end of the first arm is connected to the first constituting portion directly or through another member, and a distal end of the second arm is connected to the second constituting portion directly or through another member;
the center line of the rotation of the rotary plate extends in the horizontal direction;
at least a part of sensors constituting the detection portion are position detection sensors which detect approach of the product to be packaged on the main conveying portion to the sub-conveying portion;
the position detection sensor is provided on the operating frame;
under control of the control portion which detects the approach of the product to be packaged with the position detection sensor, the feed drive portion rotates the rotation plate by the main motor and causes the operating frame to start moving on the outward path by displacing the link member for feeding operation;
under the control of the control portion which detects the approach by the position detection sensor, the sub-motor rotates the rotary plate by a predetermined angle, whereby the link member for cutting-back is displaced to rotate the main shaft, each of the first arm and the second arm is rotated integrally with the main shaft by the rotation of the main shaft to lower the first constituting portion and to raise the second constituting portion, and the film sheet is sandwiched by the first constituting portion and the second constituting portion between the product to be packaged approaching to the sub-conveying portion on the main conveying portion and a product to be packaged preceding the product to be packaged and having been already transferred to the sub-conveying portion, while at least the first constituting portion and the second constituting portion sandwich the film sheet, the control portion further rotates the rotation plate by the main motor and causes the operating frame to move on the return path by displacing the link member for feeding operation toward an original state, wherein
the first constituting portion and the second constituting portion perform a formation of the end-part seal on the sandwiched film sheet and cutting of the film sheet during the movement on the return path, and
the control portion returns the displaced link member for cutting-back to the state before the displacement by reversely rotating the rotary plate by the sub-motor, and the main shaft reversely rotates with the returning operation of the link member for cutting-back to return the a direction of each of the first arm and the second arm to the original state, thereby raising the first constituting portion to return to the position before lowering while lowering the second constituting portion to return to the position before raising.

12. The packaging machine according to claim 8, wherein
the main conveying portion includes a first tail pulley arranged on an upstream end side in the conveyance direction, a first head pulley arranged on a downstream end side, an annular first belt installed between the both pulleys, and a conveyer power source;
the conveyer power source is an electric motor, the first head pulley rotates by direct or indirect transmission of a rotary force from the conveyer power source, the first head pulley can circulate and drive the annular first belt by the rotation, and an upper surface of the first belt constitutes a part of the conveying surface in an upper section of the circulating first belt;
the first head pulley is pivotally supported by the operating frame and moves front and rear in the conveyance direction together with the operating frame;
the main conveying portion includes a first length-adjusting pulley which is arranged on an inner side of the annular first belt and is installed on the first belt in a lower section of the circulating first belt;
the first length-adjusting pulley can be displaced in the vertical direction, by displacing the first length-adjusting pulley downward, the first head belt is pulled out downward to move the first head pulley rearward, namely upstream side, in the conveyance direction, and the first belt is moved back upward by displacing the first length-adjusting pulley upward, the first head pulley can be moved forward, namely the downstream side, in the conveyance direction,
the sub-conveying portion includes a second tail pulley in the conveyance direction arranged on the upstream end side, a second head pulley arranged on the downstream end side, and an annular second belt installed between the second tail pulley and the second head pulley, the second head pulley also rotates by direct or indirect transmission of the rotary force from the conveyer power source, the second head pulley can circulate and drive the annular second belt by the rotation, and an upper surface of the second belt also constitutes the other part of the conveying surface in an upper section of the circulating second belt;
the second tail pulley is pivotally supported by the operating frame and can move front and rear in the conveyance direction together with the operating frame;
the sub-conveying portion includes a second length-adjusting pulley which is arranged on the inner side of the annular second belt and is installed on the second belt in the lower section of the circulating second belt, and
the second length-adjusting pulley can be displaced in the vertical direction, and by displacing the second length-adjusting pulley downward, the second head belt is pulled out downward to move the second tail pulley forward, namely downstream side, in the conveyance direction, and the second belt is moved back upward by displacing the second length-adjusting pulley upward to move the second tail pulley rearward, namely the upstream side, in the conveyance direction.
